# EUROPEAN PATENT APPLICATION

(11) **EP 4 597 729 A1**
(43) Date of publication of application: **06.08.2025**
(21) Application number: 23925675.3
(22) Date of filing: 03.03.2023
(51) Int. Cl.: H01M 50/50

(54) **BATTERY CELL, BATTERY, AND ELECTRICAL DEVICE**

(71) Applicant: Contemporary Amperex Technology (Hong Kong) Limited, Central (HK)
(72) Inventor: LIN, Wenfa, Ningde, Fujian 352100 (CN); KONG, Pan, Ningde, Fujian 352100 (CN); TANG, Minghao, Ningde, Fujian 352100 (CN); ZHANG, Shengwu, Ningde, Fujian 352100 (CN)
(74) Representative: von Tietzen und Hennig, Nikolaus
(86) International application number: PCT/CN2023/079682
(87) International publication number: WO 2024/182949

(57) **Abstract**

The present application discloses a battery cell, a battery, and an electrical device. The battery cell comprises: a housing, a core assembly; a support, provided at one end of the core assembly; and an insulating member, matching the support and wrapping the core assembly. The core assembly, the support, and the insulating member are all provided in the housing, and at least a portion of the insulating member is connected to the wall surface of the support distant from the core assembly. In the technical solution of the embodiments of the present application, the reliability of connection between the insulating member and the support can be improved, the risk of falling of the insulating member can be reduced, the risk of corrosion of the housing caused by exposure of the core assembly can be reduced, the risk of failure of the core assembly can be reduced, the risk of electrolyte leakage can be reduced, and then the reliability and stability of the battery cell can be improved.

## Description

### TECHNICAL FIELD

The present application relates to the field of batteries, and in particular, to a battery cell, a battery, and an electric device.

### BACKGROUND

Energy conservation and emission reduction are the key to sustainable development of the automobile industry. Electric vehicles have become an important part for the sustainable development of the automobile industry due to their energy-saving and environmental protection advantages. For the electric vehicles, the battery technology is an important factor in their development. In the related art, the reliability of battery cells needs further improvement, so as to improve the reliability of batteries.

### SUMMARY

In view of the above problems, the present application provides a battery cell with high reliability, a battery, and an electric device.

In a first aspect, the present application provides a battery cell, including: a housing; a battery cell assembly; a support, arranged at one end of the battery cell assembly; and an insulating member, fitting the support and wrapped around the battery cell assembly, where the battery cell assembly, the support, and the insulating member are all arranged in the housing, and at least a part of the insulating member is connected to a wall surface of the support distal to the battery cell assembly.

In the technical solution of the embodiments of the present application, connecting at least a part of the insulating member to the wall surface of the support distal to the battery cell assembly can, when loading the battery cell assembly with the support into the housing, prevent the housing from scratching the connection position between the insulating member and the support, prevent the connection position of the insulating member and the support from being pulled apart in a housing process, reduce the movement and slippage of the insulating member in housing the battery cell assembly, and improve the connection reliability between the insulating member and the support, reducing the fall-off risk of the insulating member, the corrosion risk of the housing due to the exposure of the battery cell assembly, the failure risk of the battery cell assembly and the risk of electrolyte leakage, and thus improving the reliability and stability of the battery cell. Also, compared with a connection of the insulating member to the circumference of the battery cell assembly, fitting the insulating member to the support reduces the adjacencies of the insulating member to a plurality of circumferential surfaces of the housing to the adjacency to one surface at one end of the housing, and greatly reduces the probability of interfering with the fitting position of the insulating member and the support, thus further improving the reliability and stability of the insulating member and the reliability and stability of the battery cell. In addition, connecting at least a part of the insulating member to the wall surface of the support distal to the battery cell assembly can provide the insulating member with a design with greater dimensions, applicability to battery cell assemblies of different sizes, higher compatibility, and improved manufacturability. Moreover, after the support and the battery cell assembly are mounted in place in the housing, the insulating member is pressed between a wall surface of the housing opposite to an opening and the support, which can further reduce the fall-off risk of the insulating member, the failure risk of the battery cell assembly due to exposure and the corrosion risk of the housing, thereby improving the reliability and stability of the battery cell.

In some embodiments, the insulating member and the circumference of the wall surface of the support distal to the battery cell assembly are in an annular continuous connection or in an annular spaced connection, which may increase the connection area between the insulating member and the support, so as to improve the connection reliability and stability between the insulating member and the support in the circumferential direction of the support and further reduce the fall-off risk of the insulating member, thereby improving the reliability for housing the battery cell assembly and ensuring the reliability and stability of the battery cell.

In some embodiments, the insulating member and the wall surface of the support distal to the battery cell assembly are in a hot-melting connection to form a connection mark; the connection mark annularly extends in the circumferential direction of the wall surface; or, a plurality of the connection mark are present, and the plurality of connection marks are arranged in the circumferential direction of the wall surface and spaced apart. In the above technical solution, the use of the hot-melting connection may facilitate the fit of the insulating member and the support and improve the assembly efficiency, thus ensuring the housing efficiency of the battery cell assembly and saving assembly and manufacturing costs. Also, both the annular circumferential extension and the spaced circumferential arrangement of the connection mark can improve firmness of the connection between the insulating member and the support and improve the reliability and stability of the connection of the insulating member and the support, so as to adequately reduce the fall-off risk of the insulating member. In addition, compared with the annular circumferential extension, the spaced circumferential arrangement can also save materials and reduce the costs while ensuring the reliability of the connection of the insulating member and the support.

In some embodiments, a post terminal is arranged on the housing; the battery cell assembly includes an active substance-coated part and a conductive part; the conductive part is connected to the side of the active substance-coated part proximal to the support, extends toward the post terminal, and is connected to the post terminal; the insulating member and the support are jointly wrapped around the circumference of the active substance-coated part. In the above technical solution, wrapping the insulating member and the support jointly around the circumference of the active substance-coated part can completely separate the active substance-coated part from the housing, reduce the exposure of the active substance-coated part, reduce the failure and damage risks of the battery cell assembly, and improve the reliability and stability of the battery cell. Also, the configuration can reduce the size of the insulating member and the cost of the insulating member. In addition, the insulating member can be stabilized and protected by the support, so as to fully ensure the reliability and stability of the battery cell.

In some embodiments, the insulating member includes a body insulating part, a first insulating part, and a second insulating part, and the body insulating part is wrapped around the circumference of the active substance-coated part; the first insulating part and the second insulating part are separately arranged at the two ends of the body insulating part; the first insulating part is located on the side of the body insulating part distal to the support and wrapped around the end portion of the active substance-coated part distal to the support, and the second insulating part is located on the side of the body insulating part proximal to the support, configured to fit the support, and, along with the support, wrapped around the end portion of the active substance-coated part proximal to the support. The insulating member is composed of a plurality of portions, and the plurality of portions and the support can be jointly wrapped around the side portion, the bottom portion, and the top portion of the active substance-coated part, and can completely separate the active substance-coated part from the housing, so as to adequately reduce the exposure of the active substance-coated part, reduce the failure and damage risks of the battery cell assembly, reduce the corrosion risk of the housing, and improve the reliability and stability of the battery cell.

In some embodiments, the body insulating part includes a plurality of body parts; and the plurality of body parts are connected end-to-end in sequence in a ring shape, the plurality of body parts are jointly wrapped around the circumference of the active substance-coated part, and the first insulating part and the second insulating part are separately located at the two ends of the ring-shaped structure formed by the plurality of body parts. The ring shape of the connected body parts can completely be wrapped around the circumference of the active substance-coated part, such that the circumference of the active substance-coated part is completely separated from the inner wall of the housing, thereby reducing the exposure risk of the active substance-coated part and improving the reliability and stability of the battery cell.

In some embodiments, connection positions of any two adjacent body parts partially overlap. In the above technical solution, the overlapping of the connection positions of the body parts can prevent the separation and disconnection of the connection positions, reduce the probability and risk of insulation failure at the overlapping position of any two adjacent body parts, and improve the reliability of the battery cell assembly, so as to improve the stability and reliability of the battery cell. Also, the overlapping of the connection positions of the body parts can adequately ensure that the entire insulating member can be wrapped around the circumference of the active substance-coated part and adequately reduce the exposure of the active substance-coated part and the corrosion risk of the housing, so as to further improve the reliability and stability of the battery cell assembly and the battery cell.

In some embodiments, the circumference of the active substance-coated part is provided with a plurality of surfaces; each of the body parts includes a body surface and two flanges arranged on two sides of the body surface, any two adjacent body parts are connected via the flanges, and each of the body surfaces or a connection structure of every two flanges covers a different surface on the circumference of the active substance-coated part. In the above technical solution, connecting any two adjacent body parts by the flanges can ensure the connection reliability, so as to improve the reliability and stability of the battery cell assembly and the battery cell. Also, each of the body surfaces and the connection positions of every two flanges covers one surface of the circumference of the active substance-coated part, such that each surface of the circumference of the active substance-coated part can be effectively covered, thus further improving the reliability of the battery cell assembly to improve the stability and reliability of the battery cell.

In some embodiments, the circumference of the active substance-coated part is provided with four surfaces; the body insulating part includes two body parts arranged on two sides of the first insulating part, i.e., a first body part and a second body part; the first body part includes a first body surface, and a first flange and a second flange arranged on two sides of the first body surface; the second body part includes a second body surface, and a third flange and a fourth flange arranged on two sides of the second body surface; the first flange and the third flange are connected, and the second flange and the fourth flange are connected; the first body surface, the connection structure of the first flange and the third flange, the second body surface, and the connection structure of the second flange and the fourth flange separately cover the four surfaces arranged in sequence on the circumference of the active substance-coated part. When the circumference of the active substance-coated part is provided with the four surfaces, the battery cell is generally in a square shape. In this case, the first body part, the second body part, and the connection structures thereof can completely cover the four surfaces of the circumference of the active substance-coated part, such that the four surfaces of the circumference of the active substance-coated part are completely separated from the inner wall of the housing, thereby reducing the exposure risk of the active substance-coated part and adequately improving the reliability and stability of the square battery cell.

In some embodiments, the first insulating part is provided with a center line, and the first body part and the second body part are separately located on the two sides of the center line of the first insulating part; around the center line, the first body part and the second body part are arranged in mirror images, or the first body surface and the second body surface are arranged in mirror images. The completely mirror-image configuration of the two body parts may facilitate the mold opening procedure and the manufacture of the insulating member, and improve the cost-efficiency and production efficiency. When the two body surfaces are arranged in mirror images, the flanges of the two body parts may not be arranged in mirror images. In this case, the flanges of one body part may be arranged longer, and the flanges of the adjacent body part may be arranged shorter, such that when the two body parts are connected, the longer flanges may cover the shorter flanges, so as to reduce the exposure risk of the active substance-coated part and the corrosion risk of the housing while saving the costs, thereby fully improving the reliability and stability of the square battery cell.

In some embodiments, the second insulating part includes a plurality of insulating sub-parts, and the plurality of insulating sub-parts are connected to the plurality of body parts in a one-to-one correspondence; any two adjacent insulating sub-parts partially overlap, which effectively reduces the housing corrosion due to the exposure of the active substance-coated part.

In some embodiments, each of the insulating sub-parts includes a main surface and two sub-surfaces; the main surface is connected to the body surface of the corresponding body part, and the two sub-surfaces are separately connected to the two flanges of the corresponding body part; two sub-surfaces corresponding to any two adjacent flanges are connected, and each of the sub-surfaces is connected to the adjacent main surface. The arrangement of the main surface and the sub-surfaces may facilitate wrapping the insulating member around the outer side of the battery cell assembly, thus ensuring the efficiency and cost-efficiency of manufacture and assembly.

In some embodiments, the two sub-surfaces corresponding to any two adjacent flanges partially overlap; and/or, each of the sub-surfaces partially overlaps with the adjacent main surface. Either the overlapping of the two sub-surfaces or the overlapping of the sub-surface with the adjacent main surface can adequately ensure a firm fit of the entire insulating member to the support, such that the entire insulating member and the support can fit and be wrapped around the circumference of the active substance-coated part, thereby adequately reducing the exposure of the active substance-coated part and the corrosion risk of the housing and improving the stability and reliability of the battery cell.

In some embodiments, a connection position of the body insulating part and the first insulating part is provided with a score; and/or a connection position of the body insulating part and the second insulating part is provided with a score. In the above technical solution, such an arrangement may facilitate folding the insulating member to easily wrap same around the active substance-coated part, which is beneficial to improving the efficiency and cost-efficiency of production and manufacture. Also, such an arrangement can reduce errors in the process of wrapping the insulating member around the active substance-coated part and can improve the wrapping accuracy and reliability of the insulating member and the support, so as to further improve the stability and reliability of the battery cell.

In some embodiments, a post terminal is arranged on the housing; the battery cell assembly includes an active substance-coated part and a conductive part; the conductive part is connected to the side of the active substance-coated part proximal to the support; the support is provided with a via hole, and the conductive part passes through the via hole to be connected to the post terminal. The arrangement of the via hole in the support allows the support to gather and accommodate the conductive part, thus facilitating the connection of the conductive part to the post terminal and improving the assembly reliability and convenience of the battery cell. Also, the support gathers the conductive part, which can reduce the number of plastic members in the battery cell, achieve the insulation between the entire battery cell assembly and the housing through the fit of the support and the insulating member, and effectively reduce the manufacture and production costs.

In some embodiments, the support is of an integrated structure; or, the support is of a split-type structure and includes a first support and a second support that are separately formed, and the first support and the second support define the via hole therebetween. The configuration of the support into an integrated structure can reduce the number of components, intermediate connectors and costs, improve the structural strength of the support, and simplify the assembly process, which is beneficial to improving production efficiency. Configuring the support to include the first support and the second support that are separately formed may facilitate the assembly of the support and the battery cell assembly.

In some embodiments, a receiving groove in communication with the via hole is arranged on the side of the support distal to the active substance-coated part and accommodates at least a part of the post terminal. In the above technical solution, accommodating at least a part of the post terminal in the receiving groove makes the structure of the entire battery cell more compact and reliable, which is conducive to improving the energy density of the entire battery. Also, the arrangement of the receiving groove enables the insulation of the post terminal from a part of the housing via the support, so as to further improve the stability and reliability of the battery cell. In addition, accommodating the post terminal in the receiving groove may also improve the stability and reliability of the post terminal, thereby ensuring the stability and reliability of the battery cell in the charging and discharging process.

In some embodiments, a guiding part is arranged on the side of the support distal to the active substance-coated part. The guiding part defines in an enclosing manner the circumferential direction of the via hole and extends in a direction toward the post terminal. The guiding part can restrain, gather, and support the conductive part, so as to facilitate the connection of the conductive part to the post terminal, thereby improving the assembly efficiency and assembly quality of the battery cell.

In some embodiments, an accommodating part is arranged on the post terminal; at least a part of the conductive part is accommodated in the accommodating part; at least a part of the guiding part extends into the accommodating part to guide the accommodation of the conductive part in the accommodating part. In the above technical solution, the configuration of the post terminal into a hollow structure and the fit of the guiding part to the hollow structure can guide the connection of the conductive part to the post terminal, thus improving the connection reliability and ensuring the assembly efficiency and quality. Also, the conductive part can be accommodated in the accommodating part, which can improve the assembly efficiency of the conductive part, save the space occupied by the conductive part, and make full use of the space of the battery cell, thus making the fit of the support to the post terminal and the fit of the support to the conductive part closer and more reliable, making the structure of the battery cell more compact, and improving the energy density of the battery cell.

In some embodiments, a guiding groove in communication with the via hole is formed on the side of the support proximal to the active substance-coated part and accommodates at least a part of the conductive part; the cross-sectional area of the guiding groove gradually increases in a direction from the support to the active substance-coated part. The guiding groove can accommodate the conductive part and provide clearance for the conductive part to avoid crushing the conductive part, reduce the fluffing and folding probabilities in the conductive part, and reduce redundancy.

In some embodiments, the support is provided with at least one first liquid injection guide groove, and the first liquid injection guide groove is located on the side of the support proximal to the active substance-coated part; at least one of the first liquid injection guide grooves is in communication with the guiding groove. The first liquid injection guide groove can increase the fluidity of the electrolyte, improve the injection speed, and reduce formation and standing time, and the electrolyte can flow along the first liquid injection guide groove toward the guiding groove, such that the electrolyte can flow to a predetermined position, thereby increasing the contact area between the electrolyte and the active substance-coated part and alleviating the problem of poor wetting of the active substance-coated part.

In some embodiments, the support is provided with a first liquid injection guide groove, and the first liquid injection guide groove is located on the side of the support proximal to the battery cell assembly; and/or the support is provided with a second liquid injection guide groove, and the second liquid injection guide groove is located on the side of the support distal to the battery cell assembly. The first liquid injection guide groove and the second liquid injection guide groove can increase the fluidity of the electrolyte, improve the injection speed, and reduce the formation and standing time.

In some embodiments, the side of the support proximal to the battery cell assembly is provided with a clearance part configured to provide clearance for the outer edge on the side of the battery cell assembly proximal to the support, thereby reducing the risk of the support crushing the battery cell assembly.

In some embodiments, a limiting protruding part is arranged on one side of the support and in snap-fit with the battery cell assembly. The limiting protruding part can restrain one end of the battery cell assembly, reduce the fluffing probability of the outer layer of the battery cell assembly, protect the end of the battery cell assembly, and alleviate the contact problem of the end of the battery cell assembly with the housing, thereby alleviating the problem of the housing scratching the battery cell assembly in the housing process.

In some embodiments, a post terminal is arranged on the housing; the battery cell assembly includes an active substance-coated part and a conductive part; the conductive part is connected to the side of the active substance-coated part proximal to the support; the post terminal is provided with an accommodating part, and at least a part of the conductive part is accommodated in the accommodating part and connected to the post terminal. The accommodation of at least a part of the conductive part in the accommodating part can reduce the space occupied by the battery cell, so as to accommodate a greater number of battery cells in a battery of a given volume and improve the volumetric energy density of the battery. Moreover, the accommodation of at least a part of the conductive part in the accommodating part to occupy the space in the post terminal can reduce the redundancy of the conductive part in the housing to a certain extent, reduce the probability of short circuit between the conductive part and the active substance-coated part, and reduce the probability of short circuit of the battery cell, thus further improving the working reliability and stability of the battery cell and the battery.

In some embodiments, the accommodating part is provided with a first accommodating groove, the surface of the post terminal on the side proximal to the active substance-coated part is a post terminal inner end surface, an opening of the first accommodating groove is formed on the post terminal inner end surface, and at least a part of the conductive part is accommodated in the first accommodating groove.

In the above technical solution, the provision of the first accommodating groove on the post terminal can reduce the weight of the post terminal to a certain extent, so as to improve the gravimetric energy density of the battery cell and the battery. Since the opening of the first accommodating groove is formed on the post terminal inner end surface and the post terminal inner end surface is the surface of the post terminal on the side proximal to the active substance-coated part, the first accommodating groove may be open toward the active substance-coated part, thereby facilitating the conductive part to extend into the first accommodating groove and improving the assembly efficiency. Moreover, the first accommodating groove in this configuration may facilitate processing and thus improve the production efficiency.

In some embodiments, the accommodating part is provided with a second accommodating groove, the surface of the post terminal on the side distal to the active substance-coated part is a post terminal outer end surface, an opening of the second accommodating groove is formed on the post terminal outer end surface, the second accommodating groove is in communication with the interior of the housing through a perforation, and the conductive part is provided in the perforation in a penetrating manner and is at least partially accommodated in the second accommodating groove. In the above technical solution, the arrangement of the second accommodating groove on the post terminal can reduce the weight of the post terminal to a certain extent, so as to improve the gravimetric energy density of the battery cell and the battery. Also, since the opening of the second accommodating groove is formed in the post terminal outer end surface, and the post terminal outer end surface is the surface of the post terminal on the side distal to the active substance-coated part, the second accommodating groove can be opened in a direction away from the active substance-coated part. In this way, when at least a part of the conductive part is accommodated in the second accommodating groove, the storage or sorting of the conductive part or operations on the electrical connection between the conductive part and the post terminal can be easily achieved through the opening of the second accommodating groove, thereby reducing difficulties in producing the battery cell and improving the manufacture efficiency of the battery cell.

In some embodiments, the housing includes a housing body and a housing cover, and the housing body is provided with an opening; when one opening is present, the opening is lidded with the housing cover, and the support is located at the end of the battery cell assembly distal to the opening; or, when two openings are present, each of the openings is lidded with one of the housing covers, and the support is located at the end of the battery cell assembly distal to any one of the openings. A part of the insulating member is pressed between the wall of the housing body opposite to one of the openings and the corresponding support, and another part of the insulating member is pressed between the wall of the housing body opposite to another opening and the corresponding support, which further reduces the fall-off risk of the insulating member, the failure risk of the battery cell assembly due to exposure, and the corrosion risk of the housing, thereby improving the reliability and stability of the battery cell.

In the above technical solution, one opening is arranged on the housing body, and the support is arranged at the end of the battery cell assembly distal to the opening. A battery cell assembly with the support and the insulating member can only be loaded into the housing body from the opening in a unique housing direction is unique, which is conducive to improving mounting efficiency. The housing will not scratch the edge of the insulating member or the connection position between the insulating member and the support, so as to improve the connection reliability between the insulating member and the support, reduce the fall-off risk of the insulating member, the corrosion risk of housing due to the exposure of the battery cell assembly, the failure risk of the battery cell assembly, and the electrolyte leakage risk, thereby improving the reliability and stability of the battery cell. Two openings are arranged in the housing body, and the support is arranged at the end of the battery cell assembly distal to any one of the openings. A battery cell assembly with two supports and the insulating member may be loaded into the housing body from any one of the openings, and a proper housing direction can be selected as needed. After the battery cell assembly is mounted in place in the housing body, a part of the insulating member is pressed between the wall of the housing body opposite to one of the openings and the corresponding support, and the other part of the insulating member is pressed between the wall of the housing body opposite to the other opening and the corresponding support, which further reduces the fall-off risk of the insulating member, the failure risk of the battery cell assembly due to exposure, and the corrosion risk of the housing, thereby improving the reliability and stability of the battery cell.

In some embodiments, at least one post terminal is arranged on a housing wall on the side of the housing proximal to the support. In the above technical solution, the battery cell assembly with the support and the insulating member enters the housing body through the opening, and the conductive part is directly opposite to the post terminal, so as to facilitate the connection of the conductive part to the post terminal, thereby improving the assembly efficiency of the battery cell.

In a second aspect, the present application provides a battery, including the battery cell according to the above embodiments.

In the above technical solution, providing the battery with the above battery cell and connecting at least a part of the insulating member to the wall surface of the support distal to the battery cell assembly, can improve the connection reliability between the insulating member and the support, and reduce the fall-off risk of the insulating member, the corrosion risk of the housing due to the exposure of the battery cell assembly, the failure risk of the battery cell assembly and the risk of electrolyte leakage, thus improving the reliability and stability of the battery.

In a third aspect, the present application provides an electric device, including the battery according to the above embodiments.

In the above technical solution, providing the electric device with the above battery and the improved working reliability and stability of the battery can improve the working reliability and stability of the electric device.

The above description is only an overview of the technical solution of the present application. For a better understanding, the technical means of the present application can be implemented in accordance with the disclosure of the specification. To make the above and other objectives, features, and advantages of the present application clearer and understandable, the detailed description of the present application is provided below.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a structural schematic view of a vehicle according to some embodiments of the present application;
FIG. 2 is an exploded view of a battery according to some embodiments of the present application;
FIG. 3 illustrates a battery according to some embodiments of the present application;
FIG. 4 is a cross-sectional view of a battery cell according to some embodiments of the present application;
FIG. 5 is a cross-sectional view of a battery cell where a battery cell assembly is assembled with a support and an insulating member according to some embodiments of the present application;
FIG. 6 is an assembly schematic of a battery cell according to some embodiments of the present application;
FIG. 7 is an assembly schematic of a battery cell according to some other embodiments of the present application;
FIG. 8 is a top view of a battery cell according to some embodiments of the present application;
FIG. 9 is a top view of a battery cell according to some other embodiments of the present application;
FIG. 10 is a top view of a battery cell according to yet some other embodiments of the present application;
FIG. 11 is a structural schematic view of an unfolded insulating member of a battery cell according to some embodiments of the present application;
FIG. 12 is a structural schematic view of an unfolded insulating member of a battery cell according to some other embodiments of the present application;
FIG. 13 is a structural schematic view of an unfolded insulating member of a battery cell according to yet some other embodiments of the present application;
FIG. 14 is a structural schematic view of an unfolded insulating member of a battery cell according to yet some other embodiments of the present application;
FIG. 15 is a structural schematic view of a wrapped insulating member of a battery cell according to some embodiments of the present application;
FIG. 16 is a cross-sectional view of the battery cell shown in FIG. 15;
FIG. 17 is a structural schematic view of an insulating member of a battery cell before being wrapped around the battery cell assembly according to some embodiments of the present application;
FIG. 18 is a structural schematic view of a support of a battery cell according to some embodiments of the present application;
FIG. 19 is a structural schematic view of a support of a battery cell according to some other embodiments of the present application;
FIG. 20 is a partial cross-sectional view of a battery cell according to some embodiments of the present application;
FIG. 21 is a cross-sectional view of a support of a battery cell according to some embodiments of the present application;
FIG. 22 is a top view of a support of a battery cell according to some embodiments of the present application;
FIG. 23 is a top view of a support of a battery cell according to some other embodiments of the present application;
FIG. 24 is a front view of a battery cell according to some embodiments of the present application;
FIG. 25 is a front view of a battery cell according to some other embodiments of the present application;
FIG. 26 is a partial cross-sectional view of a battery cell according to some embodiments of the present application;
FIG. 27 is a partial cross-sectional view of a battery cell according to some other embodiments of the present application;
FIG. 28 is a partial cross-sectional view of a battery cell according to yet some other embodiments of the present application;
FIG. 29 is a partial cross-sectional view of a battery cell according to still some other embodiments of the present application;
FIG. 30 is a partial cross-sectional schematic view of a battery cell according to some embodiments of the present application;
FIG. 31 is a partial cross-sectional view of a battery cell according to some embodiments of the present application;
FIG. 32 is a partial cross-sectional view of a battery cell according to some embodiments of the present application;
FIG. 33 is a partial cross-sectional view of a battery cell according to some embodiments of the present application;
FIG. 34 is a partial cross-sectional view of a battery cell according to some embodiments of the present application;
FIG. 35 is a partial cross-sectional schematic view of a battery cell according to some embodiments of the present application;
FIG. 36 is an exploded view of the battery cell shown in FIG. 35;
FIG. 37 is an exploded view of the first cover plate shown in FIG. 36;
FIG. 38 is a partial cross-sectional schematic view of a battery cell according to some embodiments of the present application;
FIG. 39 is an exploded view of the battery cell shown in FIG. 38.

Reference numerals:
electric device 1000, battery 100, controller 200, motor 300,
first direction Z, second direction X, third direction Y, axial direction R of post terminal,
battery cell 10, case 20, first case 201, second case 202,
housing 11, housing body 111, opening 1110, mounting wall 1112, housing cover 112, first housing cover 1121, second housing cover 1122, mounting hole 113,
post terminal 12, accommodating part 121, first accommodating groove 12110, first end wall 12111, first recess 12112, first side wall 12113, second accommodating groove 12120, second end wall 12121, second recess 12122, second side wall 12123, first groove segment 12124, second groove segment 12125, inclined guiding surface 12126, step surface 12127, perforation 12130, post terminal inner end surface 122, post terminal outer end surface 123, first groove 126, spacer part 127,
first cover plate 13, first conductive member 131, second groove 1311, second conductive member 132, stress relief groove 133,
second cover plate 14,
battery cell assembly 2, first end 201, second end 202, active substance-coated part 21, conductive part 22,
support 3, via hole 311, guiding groove 312, guiding part 32, first support 33, second support 34, limiting protruding part 38, first surface 381, second surface 382, clearance part 391, first liquid injection guide groove 392, receiving groove 393,
insulating member 4, connection mark 401, first boundary 401a, second boundary 401b, third boundary 401c, body insulating part 41, body part 410, first body part 411, first body surface 4111, first flange 4112, second flange 4113, second body part 412, second body surface 4121, third flange 4122, fourth flange 4123, first insulating part 42, center line 42a, second insulating part 43, insulating sub-part 430, main surface 431, sub-surface 432, score 44,
groove cover 7.

### DETAILED DESCRIPTION

Embodiments of the technical solutions of the present application will be described in detail below with reference to the drawings. The following embodiments are only for illustrating the technical solutions of the present application more clearly, and therefore are only exemplary and do not limit the claimed scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality" used in the present application refers to two or more (including two).

In the description of the embodiments of the present application, unless otherwise clearly specified and defined, the technical terms "mount", "interconnect", "connect", "fix", and the like should be interpreted in their broad senses. For example, "connect" may be "fixedly connect", "detachably connect", or "integrally connect", "mechanically connect" or "electrically connect", or "directly interconnect", "indirectly interconnect through an intermediate", "communication between interiors of two elements", or "interaction between two elements". For those of ordinary skill in the art, the specific meanings of the above terms in the embodiments disclosed in the present application can be interpreted according to the specific condition.

In the present application, battery cells may include lithium-ion secondary batteries, lithium-ion primary batteries, lithium-sulfur batteries, sodium-lithium-ion batteries, sodium-ion batteries, magnesium-ion batteries, etc. This is not limited in the embodiments of the present application. The battery cell may be cylindrical, flat, rectangular parallelepiped-shaped, or in other shapes, which is also not limited in the embodiments of the present application. According to the packaging method, battery cells are typically divided into three types: cylindrical battery cells, square battery cells, and soft-pack battery cells, which are not limited in the embodiments of the present application.

The battery described in embodiments of the present application refers to a single physical module including one or more battery cells to provide a higher voltage and capacity. For example, the battery mentioned in the present application may be a battery module, a battery pack, or the like. A battery module generally includes a plurality of battery cells. The battery pack generally includes a case and one or more battery cells arranged in the case, or the battery pack includes a case and one or more battery modules arranged in the case. The case can prevent liquid or other foreign matter from affecting the charging or discharging of the battery cell.

Illustratively, the battery cell may generally include a housing, an electrode assembly, and an electrolyte. The housing is configured to accommodate the electrode assembly and the electrolyte, and at least one positive electrode post terminal and at least one negative electrode post terminal are arranged on the housing. The electrode assembly is formed by stacking or winding a positive electrode plate, a negative electrode plate, and a separation film. The positive electrode plate may generally include a positive electrode current collector and a positive electrode active substance layer. The positive electrode current collector is directly or indirectly coated with the positive electrode active substance layer, the positive electrode current collector not coated with the positive electrode active substance layer protrudes from the positive electrode current collector coated with the positive electrode active substance layer, the positive electrode current collector not coated with the positive electrode active substance layer serves as a positive electrode tab plate, and a plurality of positive electrode tab plates are stacked together and electrically connected to the positive electrode post terminal. The negative electrode plate may generally include a negative electrode current collector and a negative electrode active substance layer. The negative electrode current collector is directly or indirectly coated with the negative electrode active substance layer, the negative electrode current collector not coated with the negative electrode active substance layer protrudes from the negative electrode current collector coated with the negative electrode active substance layer, the negative electrode current collector not coated with the negative electrode active substance layer serves as a negative electrode tab plate, and a plurality of negative electrode tab plates are stacked together and electrically connected to the negative electrode post terminal. The material of the separation film is not limited, such as polypropylene or polyethylene.

Meanwhile, a battery cell primarily works by the movement of metal ions between the positive electrode plate and the negative electrode plate. Taking lithium-ion batteries as an example, the material of the positive electrode current collector may be aluminum, the material of the positive electrode active substance layer may be lithium cobaltate, lithium iron phosphate, ternary lithium, lithium manganate, etc., the material of the negative electrode current collector may be copper, and the material of the negative electrode active substance layer may be carbon, silicon, etc. During the charging and discharging processes, Li+ is intercalated or deintercalated back and forth between the two electrodes: during charging, Li+ is deintercalated from the positive electrode, and intercalated into the negative electrode through the electrolyte, and the negative electrode is in a lithium-rich state; during discharging, the process is reversed.

At present, judging from the development of the market situation, the application of power batteries is becoming broader. Power batteries are not only applied in energy storage power systems such as hydropower, thermal power, wind power and solar power stations, but are also widely applied in electric transportation vehicles such as electric bicycles, electric motorcycles, electric cars, as well as in military equipment, aerospace, and other fields. As the application of the power batteries becomes broader, the market demand thereof is also increasing.

In the related art, the battery cell generally includes a housing with an opening, a top cover, a battery cell assembly, an insulating member, and a plastic member. The battery cell assembly is arranged in the housing. The top cover is provided with a post terminal. The battery cell assembly is electrically connected to the post terminal. The plastic member is arranged on the side of the top cover proximal to the post terminal to provide insulation. The insulating member is wrapped around the bottom portion of the battery cell assembly distal to the top cover and the circumference of the battery cell assembly, and is connected to the plastic member to ensure the insulation between the battery cell assembly and the housing, thereby ensuring the normal charging and discharging process of the battery.

However, the inventors have found that when the battery cell assembly of the above structure is loaded into the housing, the insulating member is prone to wrinkling and edge curling due to friction with the housing, and may even easily detach from the plastic member, which consequently causes the exposure of the battery cell assembly to the inner wall surface of the housing, thus leading to the corrosion of the housing and affecting the reliability of the battery cell in use.

In view of this, in order to solve the above problems, the present application provides a battery cell. By arranging a support at one end of the battery cell assembly, the insulating member is fitted to the support to be jointly wrapped around the battery cell assembly, and at least a part of the insulating member is connected to the wall surface of the support distal to the battery cell assembly to reduce the tension of the housing at the connection position of the insulating member to the support during the housing process, so as to reduce the movement and slippage of the insulating member in the housing process of the battery cell assembly, improve the connection reliability between the insulating member and the support, and reduce the fall-off risk of the insulating member, the corrosion risk of the housing due to the exposure of the battery cell assembly, the failure risk of the battery cell assembly and the risk of electrolyte leakage, thus improving the reliability and stability of the battery cell.

The battery cell disclosed in embodiments of the present application can be used in electric devices that use batteries as the power source or in various energy storage systems that use batteries as the energy storage element. The electric device may be, but is not limited to, a mobile phone, a tablet or laptop computer, an electric toy, an electric tool, an electric bike, an electric car, a ship, a spacecraft, and the like. The electric toy may include a stationary or mobile electric toy, such as a game console, an electric car toy, an electric ship toy, and an electric airplane toy, and the spacecraft may include an airplane, a rocket, a space shuttle, a spaceship, and the like.

Taking a vehicle as an example of the electric device according to one embodiment of the present application, structures of the battery cell, the battery, and the electric device according to embodiments of the present application are described in detail.

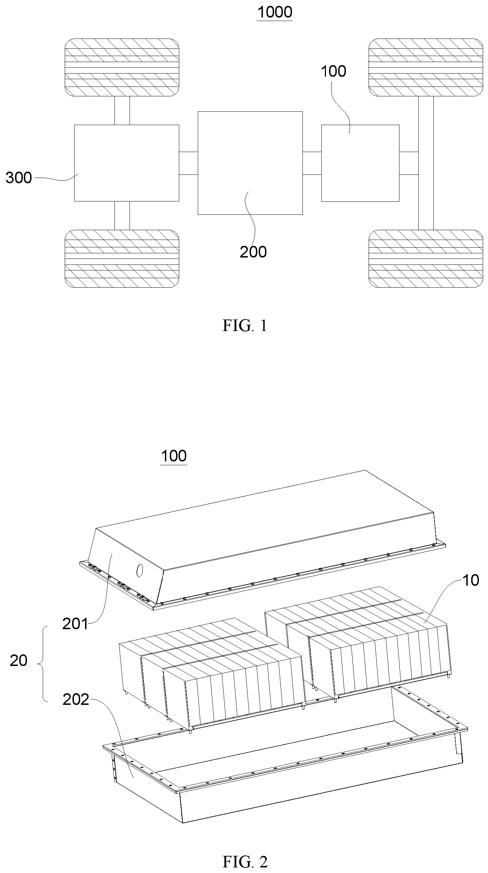

Referring to FIG. 1, FIG. 1 is a structural schematic view of an electric device 1000 according to some embodiments of the present application as a vehicle. The vehicle may be a fuel vehicle, a gas vehicle, or a new energy vehicle. The new energy vehicle may be a pure electric vehicle, a hybrid vehicle, an extended-range vehicle, or the like. A battery 100 is arranged in the vehicle, and the battery 100 may be arranged at the bottom, head, or tail of the vehicle. The battery 100 may be used for powering the vehicle. For example, the battery 100 may serve as an operation power source for the vehicle. The vehicle may further include a controller 200 and a motor 300. The controller 200 is configured to control the battery 100 to power the motor 300, e.g., for operation power needed by the vehicle for start-up, navigation, and driving. In some embodiments of the present application, the battery 100 may not only serve as the operation power source for the vehicle, but also as a driving power source for the vehicle to, instead of or in part instead of fuel or natural gas, provide driving power for the vehicle.

Referring to FIG. 2, FIG. 2 illustrates an exploded view of a battery cell 10 used in the battery 100 according to some embodiments of the present application. The battery 100 includes a case 20 and a plurality of battery cells 10, and the battery cells 10 are accommodated in the case 20. The case 20 is configured to provide an accommodating space for the battery cell 10, and the case 20 may have a variety of structures. In some embodiments, the case 20 may include a first case 201 and a second case 202. The first case 201 and the second case 202 are lidded with each other. The first case 201 and the second case 202 jointly define the accommodating space for accommodating the battery cell 10. The second case 202 may be of a hollow structure with one end open, and the first case 201 may be of a plate structure. The open side of the second case 202 is lidded with the first case 201, such that the first case 201 and the second case 202 jointly define the assembly space. Alternatively, the first case 201 and the second case 202 may both be of a hollow structure with one side open (e.g., as shown in FIG. 2), and the open side of the second case 202 is lidded with the open side of the first case 201. Certainly, the case 20 formed by the first case 201 and the second case 202 can have various shapes, such as a cylinder, a cuboid, etc.

In the battery 100, the plurality of battery cells 10 may be connected in series, in parallel, or in series-parallel. The series-parallel connection means that both series connection and parallel connection are present for the connection among the plurality of battery cells 10. The plurality of battery cells 10 can be directly connected in series, in parallel, or in a mixed connection, and then the whole formed by the plurality of battery cells 10 is accommodated in the case 20. Alternatively, the battery 100 may also be in a form where a plurality of battery cells 10 are first connected in series, in parallel, or in a mixed connection to give a battery module, and then a plurality of battery modules are connected in series, in parallel, or in a mixed connection to form a whole and accommodated in the case 20. The battery 100 may further include additional structures. For example, the battery 100 may further include a busbar component for achieving the electrical connection between the plurality of battery cells 10.

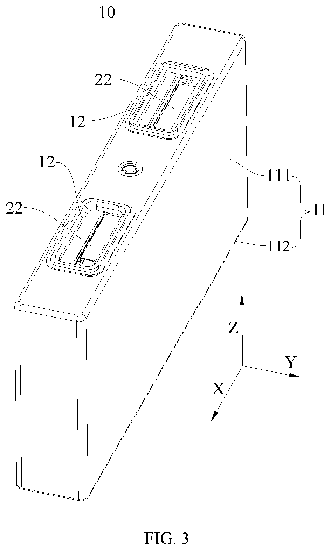

Referring to FIG. 3, FIG. 3 illustrates a schematic view of a battery cell 10 according to some embodiments of the present application. In the embodiments of the present application, the battery cell 10 is in the shape of a cuboid, and the height direction of the battery cell 10 is a first direction Z, the length direction of the battery cell 10 is a second direction X, and the thickness direction of the battery cell 10 is a third direction Y. The first direction Z, the second direction X, and the third direction Y are perpendicular to each other, Certainly, in other embodiments of the present application, the battery cell 10 may also be cylindrical, flat, or in other shapes, which is not limited in this embodiment.

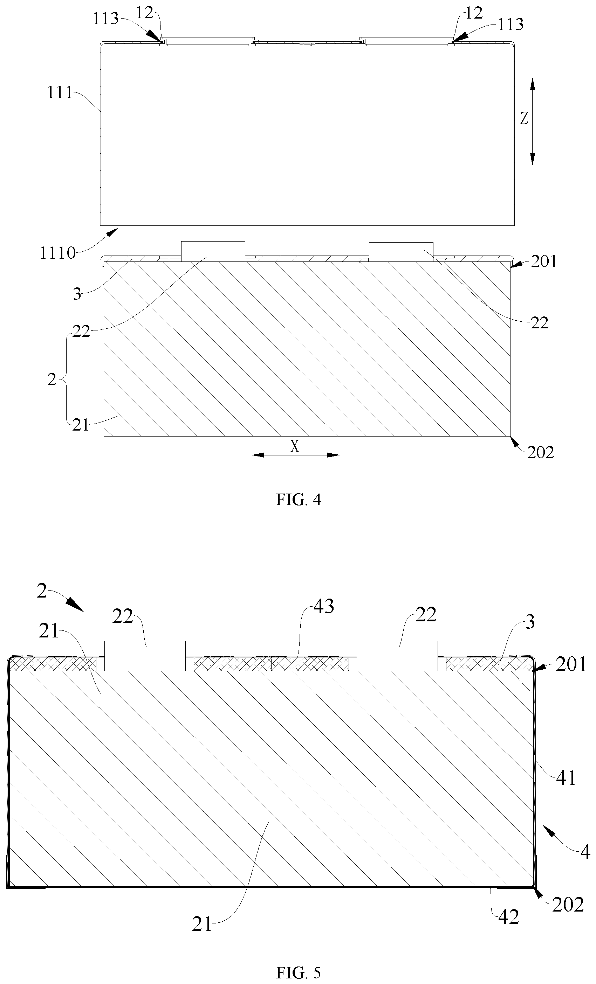

Referring to FIGs. 4 and 5, FIG. 4 is a cross-sectional view of a battery cell 10 according to some embodiments of the present application. FIG. 5 is a cross-sectional view of a battery cell 10 where a battery cell assembly 2 is assembled with a support 3 and an insulating member 4 according to some embodiments of the present application. In the embodiments of the present application, the battery cell 10 includes a housing 11, the battery cell assembly 2, the support 3, and the insulating member 4.

The shape of the housing 11 is adjusted according to the type of the battery cell 10, and the type of the battery cell 10 in the embodiments of the present application is not limited. For example, when the battery cell 10 is a square battery, the housing 11 is square, and when the battery cell 10 is a cylindrical battery, the housing 11 is cylindrical. The embodiments of the present application are all described by taking the housing 11 as a square as an example. Also, a post terminal 12 is arranged on the housing 11. The post terminal 12 is configured to be electrically connected to the battery cell assembly 2 to ensure the normal charging and discharging operations of the battery cell 10. Generally, the number of post terminals is at least two, specifically including at least one positive electrode post terminal and at least one negative electrode post terminal. For example, when the number of post terminals is two, one is a positive electrode post terminal and the other is a negative electrode post terminal, and the two are electrically connected to positive and negative output positions of the battery cell assembly 2, respectively. For another example, when the number of post terminals is four, two may be positive electrode post terminals and two may be negative electrode post terminals. In this case, the two positive electrode post terminals are both electrically connected to a positive output position of the battery cell assembly 2, and the two negative electrode post terminals are both electrically connected to a negative output position of the battery cell assembly 2. A pressure relief mechanism for relieving the internal pressure when the internal pressure or temperature of the battery cell 10 reaches a threshold may also be arranged on the housing 11. The pressure relief mechanism can relieve the pressure when the internal pressure or temperature of the battery cell 10 is excessive to prevent thermal runaway from being transmitted to other battery cells 10.

Furthermore, in the embodiments of the present application, the housing 11 specifically includes a housing body 111 and a housing cover 112.

The housing body 111 is of a partially closed structure with an opening 1110 at one end, or of an annular structure with openings 1110 at both ends. Also, the housing body 111 may have a variety of shapes and sizes, such as a cuboid shape, a cylindrical shape, a hexagonal prism shape, etc. The shape of the housing body 111 may be determined according to the specific shape and size of the battery cell assembly 2. In addition, the housing body 111 may be made of a variety of materials, such as copper, iron, aluminum, stainless steel, an aluminum alloy, plastic, etc., which is not specified in the embodiments of the present application. The housing body 111 is provided with an opening 1110, and the number of the opening 1110 may be one or more.

The housing cover 112 refers to a component that lids the opening 1110 of the housing body 111 to isolate the internal environment of the battery cell 10 from the external environment. Furthermore, the number of the housing cover 112 is consistent with the number of the opening 1110. When one opening 1110 is present, the number of the housing cover 112 is also one, and the housing cover lids the opening 1110 to close the opening 1110. When two openings 1110 are present, the number of the housing cover 112 is two, and the housing covers separately lid the two openings 1110 to close the corresponding openings 1110. The housing cover 112 and the housing body 111 may form a common connection surface before other components are housed, and when the interior of the housing body 111 needs to be encapsulated, the housing cover 112 lids the housing body 111. Also, the shape of the housing cover 112 may be adapted to the shape of the housing body 111 so as to match the housing body 111. Optionally, the housing cover 112 may be made of a material with a certain hardness and strength (for example, aluminum alloy), such that the housing cover 112 is not easily deformed when being squeezed or collided. This provides the battery cell 10 with higher structural strength and improved safety performance. Functional components such as the post terminal 12 may be arranged on the housing cover 112. The housing cover 112 may also be made of a variety of materials, such as copper, iron, aluminum, stainless steel, an aluminum alloy, plastic, etc., which is not specified in the embodiments of the present application.

When a plurality of post terminals 12 are arranged on the housing 11, the plurality of post terminals 12 may be all arranged on the housing body 111 or all arranged on the housing cover 112, or a part of the post terminals 12 are arranged on the housing body 111 and the others are arranged on the housing cover 112. The following embodiments of the present application are all described on the basis of a square housing body 111, one opening 1110 in the housing body 111, and two post terminals 12 (a positive post terminal and a negative post terminal) arranged on the wall body of the housing body 111 opposite to the opening 1110, as an example. Certainly, in other embodiments of the present application, the shape of the housing body 111, the number of the opening 1110 and the housing cover 112, the number of the post terminal 12, and the position of the post terminal 12 may be all adjusted as needed, which is not limited in the embodiments of the present application.

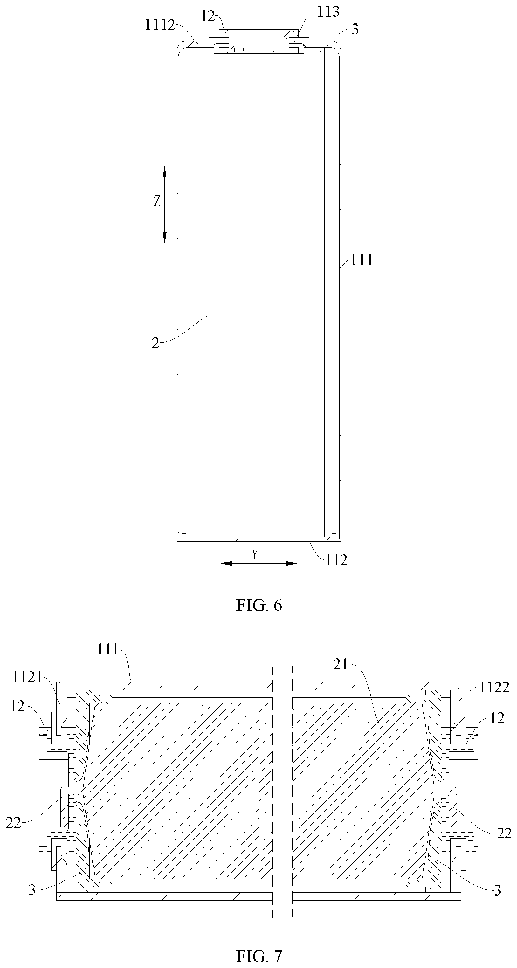

In the embodiments of the present application, referring to FIGs. 4 and 5 and further referring to FIG. 6, FIG. 6 is an assembly schematic of a battery cell 10 according to some embodiments of the present application. In the embodiments of the present application, the support 3 is arranged at one end of the battery cell assembly 2. When the battery cell 10 is assembled, the support 3 may be first arranged at one end of the battery cell assembly 2, and then the battery cell assembly 2 with the support 3 may be loaded into the housing 11, such that the support 3 first enters the housing body 111 from the opening 1110 of the housing body 111, and then the battery cell assembly 2 enters the housing body 111. After the battery cell assembly 2 is mounted in place in the housing body 111, the support 3 is located at the wall of the housing body 111 opposite to the opening 1110 thereof and the end of the battery cell assembly 2 distal to the opening 1110.

Referring to FIG. 6 again, when one opening 1110 is present in the housing body 111, the support 3 is specifically arranged at the end of the battery cell assembly 2 distal to the opening 1110. The opening 1110 may be located on the top wall, the bottom wall, or a side wall of the housing body 111. When the opening 1110 is located at the bottom wall of the housing body 111, the other walls are all of a closed structure. The battery cell assembly 2 with the support 3 and the insulating member 4 can only be loaded into the housing body 111 from the opening 1110. After the battery cell assembly 2 is mounted in place in the housing body 111, the housing cover 112 lids the opening 1110 to seal the opening 1110. The insulating member 4 is pressed between the top wall of the housing body 111 and the support 3, thus reducing the fall-off risk of the insulating member 4, the failure risk of the battery cell assembly 2 due to exposure, and the corrosion risk of the housing 11, thereby improving the reliability and stability of the battery cell 10.

In the above technical solution, one opening 1110 is arranged on the housing body 111, and the support 3 is arranged at the end of the battery cell assembly 2 distal to the opening 1110. A battery cell assembly 2 with the support 3 and the insulating member 4 can only be loaded into the housing body 111 from the opening 1110 in a unique housing direction is unique, which is conducive to improving mounting efficiency. The housing 11 will not scratch the edge of the insulating member 4 or the connection position between the insulating member 4 and the support 3, so as to improve the connection reliability between the insulating member 4 and the support 3, reduce the fall-off risk of the insulating member 4, the corrosion risk of housing 11 due to the exposure of the battery cell assembly 2, the failure risk of the battery cell assembly 2, and the electrolyte leakage risk, thereby improving the reliability and stability of the battery cell 10.

Referring to FIG. 6 again, in the embodiments of the present application, in the condition that one opening 1110 is arranged on the housing body 111, all the post terminals 12 may be arranged on the end wall of the housing body 111 opposite to the opening 1110, such that the conductive part 22 can penetrate through the support 3 and is electrically connected to the post terminal 12 on the end wall of the housing body 111 correspondingly. In other embodiments of the present application, all the post terminals 12 may be arranged on the housing cover 112. That is, all the post terminals 12 are located on the side of the battery cell assembly 2 distal to the support 3, and the conductive part 22 may be electrically connected to the post terminal 12 on the housing cover 112 correspondingly. Alternatively, in other embodiments of the present application, one of the post terminals 12 may be arranged on the housing cover 112, and the other post terminal 12 may be arranged on the end wall of the housing body 111 opposite to the opening 1110. One of the conductive parts 22 may be electrically connected to the post terminal 12 on the housing cover 112.

Specifically, referring to FIG. 6 again, in the embodiments of the present application, in the condition that one opening 1110 is arranged on the housing body 111, the end wall of the housing body 111 opposite to the opening 1110 is defined as the mounting wall 1112, and all the post terminals 12 are arranged on the mounting wall 1112. By such a structural configuration, when the battery cell 10 is assembled, the battery cell assembly 2 enters the housing body 111 through the opening 1110, and the conductive part 22 is directly arranged opposite to the post terminal 12, such that the conductive part 22 can be easily connected to the post terminal 12, thereby improving the assembly efficiency of the battery cell 10.

It should be noted that in the embodiments of the present application, the mounting wall 1112 is specifically the top wall of the housing body 111 (i.e., the end proximal to the busbar component of the battery), and the bottom wall of the housing body 111 (i.e., the end distal to the busbar component of the battery) is provided with the opening 1110. By such an arrangement, the housing cover 112 is arranged at the bottom of the housing body 111, and thus the battery cell assembly 2 can be mounted into the housing body 111 from bottom to top in the direction Z, such that the conductive part 22 can be easily connected to the post terminal 12. The tension of the busbar component on the housing body 111 may not be concentrated on a position where the housing body 111 fits the housing cover 112, and prevents the fitting position from cracking, thus effectively improving the reliability and stability of the battery cell 10.

Referring to FIG. 7, FIG. 7 is an assembly schematic of a battery cell 10 according to some other embodiments of the present application. In other embodiments of the present application, two openings 1110 may be arranged on the housing body 111, and each opening 1110 is lidded with a housing cover 112. In this configuration, the support 3 is specifically arranged at the end of the battery cell assembly 2 distal to any one of the openings 1110.

By such a configuration, when the battery cell 10 is assembled, the battery cell assembly 2 with the support 3 and the insulating member 4 may be loaded into the housing body 111 from any one of the openings 1110. After the battery cell assembly 2 is mounted in place in the housing body 111, the two housing covers 112 separately lid the two openings 1110 to seal the corresponding openings 1110. After the battery cell assembly 2 with the two supports 3 is housed, one of the conductive parts 22 penetrates through one support 3 and is electrically connected to the post terminal 12 on the corresponding housing cover 112, and the other one of the conductive parts 22 penetrates through the other support 3 and is electrically connected to the post terminal 12 on the corresponding housing cover 112.

Specifically, referring to FIG. 7 again, when two openings 1110 are present in the housing body 111, the two openings 1110 may be located in the top wall, the bottom wall, or a side wall of the housing body 111, or the two openings 1110 may even be formed in two walls of the housing body 111 arranged opposite to each other. As shown in FIG. 7, the two openings 1110 may be separately formed in the top wall and the bottom wall of the housing body 111. In other embodiments, the two openings 1110 may also be separately formed in two side walls of the housing body 111 arranged opposite to each other, or may also be formed in two adjacently arranged walls of the housing body 111, which will not be recited herein.

It should be noted that when the two openings 1110 are separately formed on two walls of the housing body 111 arranged opposite to each other, the other walls are all of a closed structure, where one opening 1110 is lidded with a first housing cover 1121, and the other opening 1110 is lidded with a second housing cover 1122. At this time, all the post terminals 12 may be arranged on the first housing cover 1121, or all the post terminals 12 may be arranged on the second housing cover 1122, or a part of the post terminals 12 are arranged on the first housing cover 1121 or the second housing cover 1122, and the other part of the post terminals 12 are arranged on the housing body 111.

Illustratively, referring to FIG. 7 again, when two openings 1110 are present, the two openings 1110 may be a first opening and a second opening arranged opposite to each other. Each of the first housing cover 1121 and the second housing cover 1122 is provided with one post terminal 12. Each of the two ends of the battery cell assembly 2 is provided with one support 3. When the battery cell 10 is assembled, in a process that the battery cell assembly 2 with the support 3 is loaded into the housing 11, the support 3 first enters the housing body 111 through the first opening of the housing body 111 and moves toward the second opening, and then the battery cell assembly 2 enters the housing body 111. After the battery cell assembly 2 is mounted in place in the housing body 111, the support 3 is located at the second opening.

In the above technical solution, two openings 1110 are arranged in the housing body 111, and the support 3 is arranged at the end of the battery cell assembly 2 distal to any one of the openings 1110. A battery cell assembly 2 with two supports 3 and the insulating member 4 may be loaded into the housing body 111 from any one of the openings 1110, and a proper housing direction can be selected as needed. In the housing process, the support 3 can be helpful in guiding the housing process of the battery cell assembly 2 to ensure assembly efficiency. After the battery cell assembly 2 is mounted in place in the housing body 111, a part of the insulating member 4 is pressed between the wall of the housing body 111 opposite to one of the openings 1110 and the corresponding support 3, and the other part of the insulating member 4 is pressed between the wall of the housing body 111 opposite to the other opening 1110 and the corresponding support 3, which further reduces the fall-off risk of the insulating member 4, the failure risk of the battery cell assembly 2 due to exposure, and the corrosion risk of the housing 11, thereby improving the reliability and stability of the battery cell 10.

Also, at least one post terminal 12 is arranged on a housing wall on the side of the housing 11 proximal to the support 3. The battery cell assembly 2 with the support 3 and the insulating member 4 enters the housing body 111 through the opening 1110, and the conductive part 22 is directly opposite to the post terminal 12, so as to facilitate the connection of the conductive part 22 to the post terminal 12, thereby improving the assembly efficiency of the battery cell 10.

Referring to FIG. 5 again, in the embodiments of the present application, the insulating member 4 fits the support 3, and the two are jointly wrapped around the battery cell assembly 2. Since the support 3 is arranged at one end of the battery cell assembly 2, the insulating member 4 can be wrapped around the battery cell assembly 2 from the several other surfaces of the battery cell assembly 2, such that the circumference of the entire battery cell assembly 2 can be insulated from the housing 11. That is, the insulating member 4 can improve the insulation reliability between the battery cell assembly 2 and the housing 11, reduce or prevent the corrosion of the housing 11 due to the contact between the battery cell assembly 2 and the housing 11, reduce the leakage of the electrolyte due to the corrosion of the housing 11, and improve the reliability of the battery cell 10.

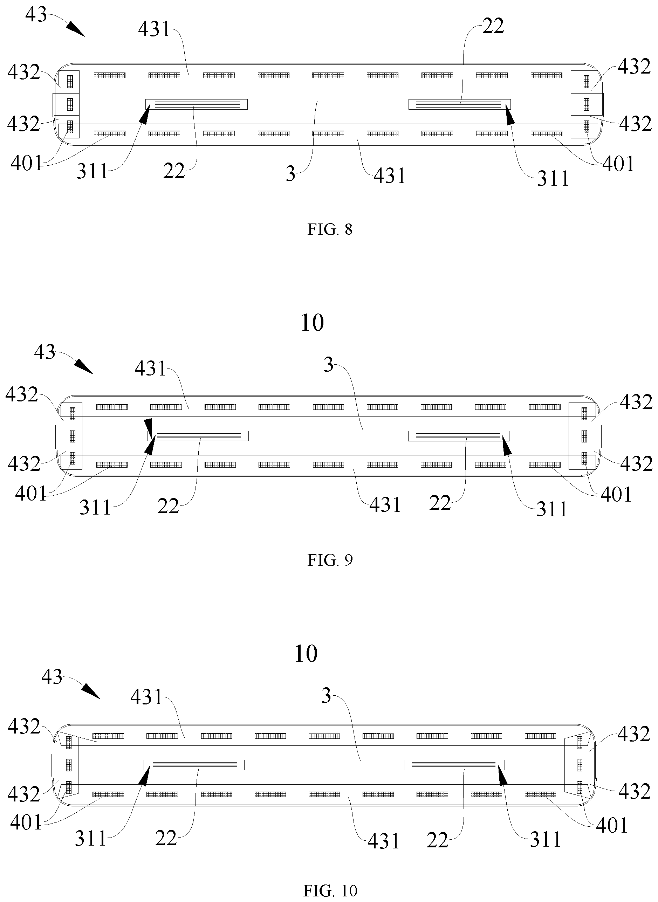

In addition, FIG. 8 is a top view of a battery cell according to some embodiments of the present application. FIG. 9 is a top view of a battery cell according to some other embodiments of the present application. FIG. 10 is a top view of a battery cell according to yet some other embodiments of the present application. Referring to FIGs. 8-10, in the embodiments of the present application, the insulating member 4 is matched with the support 3, and at least a part of the insulating member 4 may be connected to a wall surface of the support 3 distal to the battery cell assembly 2. Referring to FIG. 6 again, for the convenience of description, it can be defined that the battery cell assembly 2 is provided with a first end 201 and a second end 202 arranged opposite to each other. The support 3 may be arranged at the first end 201 of the battery cell assembly 2, and the insulating member 4 may be connected to a wall surface of the support 3 distal to the first end 201 of the battery cell assembly 2. Therefore, the connection position between the insulating member 4 and the support 3 is located on the wall surface of the support 3 distal to the first end 201 of the battery cell assembly 2, and the edge of the insulating member 4 proximal to the first end 201 of the battery cell assembly 2 is located on the wall surface of the support 3 distal to the first end 201 of the battery cell assembly 2.

In the technical solution of the embodiments of the present application, connecting at least a part of the insulating member 4 to the wall surface of the support 3 distal to the battery cell assembly 2 can, when loading the battery cell assembly 2 with the support 3 into the housing 11, prevent the housing 11 from scratching the connection position between the insulating member 4 and the support 3, prevent the connection position of the insulating member 4 and the support 3 from being pulled apart in a housing process, reduce the movement and slippage of the insulating member 4 in housing the battery cell assembly 2, and improve the connection reliability between the insulating member 4 and the support 3, reducing the fall-off risk of the insulating member 4, the corrosion risk of the housing 11 due to the exposure of the battery cell assembly, the failure risk of the battery cell assembly 2 and the risk of electrolyte leakage, and thus improving the reliability and stability of the battery cell 10. Also, compared with a connection of the insulating member 4 to the circumference of the battery cell assembly 2, fitting the insulating member 4 to the support 3 reduces the adjacencies of the insulating member 4 to four circumferential surfaces of the housing 11 to the adjacency to one surface at one end of the housing 11, and greatly reduces the probability of interfering with the fitting position of the insulating member 4 and the support 3, thus further improving the reliability and stability of the insulating member 4 and the reliability and stability of the battery cell 10. In addition, connecting at least a part of the insulating member 4 to the wall surface of the support distal to the battery cell assembly 2 can provide the insulating member 4 with a design with greater dimensions, applicability to battery cell assemblies 2 of different sizes, higher compatibility, and improved manufacturability. Moreover, after the support 3 and the battery cell assembly 2 are mounted in place in the housing 11, the insulating member 4 is pressed between a wall surface of the housing 11 opposite to an opening 1110 and the support 3, which can further reduce the fall-off risk of the insulating member 4, the failure risk of the battery cell assembly 2 due to exposure and the corrosion risk of the housing 11, thereby improving the reliability and stability of the battery cell 10.

In addition, since the post terminals 12 are all arranged at positions of the housing body 111 opposite to the opening 1110, and the position where the insulating member 4 fits the support 3 is located on the side of the support 3 distal to the battery cell assembly 2. As the battery cell assembly 2 enters the housing, if the part of the insulating member 4 located in a circumferential direction of the battery cell assembly 2 is in contact with the housing body 111, the housing body 111 will gradually smooth the insulating member 4 and prevent the insulating member 4 from stacking or wrinkling, thus making the insulation effect between the battery cell assembly 2 and the housing 11 more stable and helping improve the reliability and stability of the battery cell 10.

Referring to FIGs. 8-10 again, in the embodiments of the present application, the insulating member 4 and the circumference of the wall surface of the support 3 distal to the battery cell assembly 2 are in an annular spaced connection. That is, there are a plurality of connection positions between the insulating member 4 and the support 3, and the plurality of connection positions are arranged in the circumferential direction of the support 3 and spaced apart from each other. On the basis of ensuring the reliability and stability of the connection between the insulating member 4 and the support 3 in the circumferential direction of the support 3, the configuration may also save connection materials, reduce material costs, simplify the connection procedures, and improve the production efficiency.

Certainly, in other embodiments of the present application, the insulating member 4 and the wall surface of the support 3 distal to the battery cell assembly 2 may also be in an annular continuous connection in the circumferential direction. The annular connection herein refers to that the connection position of the insulating member 4 and the support 3 extends in the circumferential direction of the support 3 to form a closed ring shape. Such a configuration may increase the connection area between the insulating member 4 and the support 3, so as to improve the connection reliability and stability between the insulating member 4 and the support 3 in the circumferential direction of the support 3 and further reduce the fall-off risk of the insulating member 4, thereby improving the reliability for housing the battery cell assembly 2 and ensuring the reliability and stability of the battery cell 10.

In addition, in other embodiments of the present application, the connection positions of the insulating member 4 and the support 3 can be concentrated on two opposite sides, two adjacent sides, or a plurality of sides of the support 3, which can be selected according to the actual shapes of the battery cell assembly 2 and the support 3 and are not limited here.

Referring to FIGs. 8-10 again, in the embodiments of the present application, the connection manner between the insulating member 4 and the support 3 may be a hot-melting connection, and the insulating member 4 and the wall surface of the support 3 distal to the battery cell assembly 2 are in a hot-melting connection to form a connection mark 401. The position of the connection mark 401 is not limited in space. Compared with the related art, the area of the connection mark 401 can be designed to be greater, so as to make the connection firmer and reduce the fall-off risk of the insulating member 4.

Specifically, in the embodiments of the present application, when a plurality of connection marks 401 are present, and the plurality of connection marks 401 are arranged in the circumferential direction of the wall surface of the support 3 distal to the battery cell assembly 2 and spaced apart from each other. In other embodiments of the present application, the connection mark 401 may also extend annularly in the circumferential direction of the wall surface of the support 3 distal to the battery cell assembly 2 to make the connection between the insulating member 4 and the support 3 firmer, thereby adequately improving the connection reliability between the insulating member 4 and the support 3 and reducing the fall-off risk of the insulating member 4.

It should be noted that in the embodiments of the present application, the shape of the connection mark 401 may be rectangular, circular, oval, etc., or may be irregular. The arrangement of the plurality of connection marks 401 can be selected according to the actual shapes of the battery cell assembly 2 and the support 3. For example, when the cross-sectional shapes of the battery cell assembly 2 and the support 3 are square or rectangular, the plurality of connection marks 401 may be distributed near four sides of the support 3, or may be concentrated on opposite sides of the support 3. For another example, when the cross-sectional shapes of the battery cell assembly 2 and the support 3 are circular, the plurality of connection marks 401 may be evenly distributed along the circumference of the wall surface of the support 3 distal to the battery cell assembly 2.

Certainly, the distribution form of the plurality of connection marks 401 is not limited to those above, and the distance between two adjacent connection marks 401 can be adjusted as needed. The number of the connection mark 401 can be appropriately increased to save materials and reduce the costs while ensuring the connection reliability between the insulating member 4 and the support 3.

Taking a cuboid battery cell assembly 2 as an example, in the embodiments of the present application, the support 3 may be a rectangular plate member of a corresponding shape, the support 3 is arranged on a wall surface of the battery cell assembly 2, and the insulating member 4 is wrapped around the other five wall surfaces on the circumference of the battery cell assembly 2 to ensure the insulation effect between the battery cell assembly 2 and the housing 11. Also, the connection mark 401 formed by the insulating member 4 and the wall surface of the support 3 distal to the battery cell assembly 2 may be arranged adjacent to the circumference of the support 3, and may be adjacent to two sides, three sides, or four sides along the circumference of the support 3. The number of the connection marks 401 formed by connecting the insulating member 4 and positions near the corresponding sides may be increased or decreased according to the size of the corresponding sides, which is not limited in the embodiments of the present application.

In the above technical solution, the use of the hot-melting connection may facilitate the fit of the insulating member 4 and the support 3 and improve the assembly efficiency, thus ensuring the housing efficiency of the battery cell assembly 2 and saving assembly and manufacturing costs. Also, both the annular circumferential extension and the spaced circumferential arrangement of the connection mark 401 can improve firmness of the connection between the insulating member 4 and the support 3 and improve the reliability and stability of the connection of the insulating member 4 and the support 3, so as to adequately reduce the fall-off risk of the insulating member 4. In addition, compared with the annular circumferential extension, the spaced circumferential arrangement can also save materials and reduce the costs while ensuring the reliability of the connection of the insulating member 4 and the support 3.

Referring to FIGs. 4 and 5 again, according to some embodiments of the present application, referring to FIGs. 3-5 again, in the embodiments of the present application, the battery cell assembly 2 specifically includes an active substance-coated part 21 and a conductive part 22. The active substance-coated part 21 is accommodated in the housing 11. The active substance-coated part 21 is a part of the battery cell assembly 2 coated with an active substance, and can assist in the deintercalation of metal ions during the charging and discharging processes of the battery cell 10. The conductive part 22 is of a metal structure that electrically connects the active substance-coated part 21 and the post terminal 12, and is not coated with the active substance. Also, the conductive part 22 is connected to the side of the active substance-coated part 21 proximal to the support 3, extends toward the post terminal 12, and is connected to the post terminal 12, so as to ensure charging and discharging operations of the battery cell 10. Specifically, the insulating member 4 and the support 3 are jointly wrapped around the circumference of the active substance-coated part 21. In other words, in the battery cell assembly 2, except for the conductive part 22 extending out of the support 3 to be connected to the post terminal 12, the insulating member 4 and the support 3 are jointly wrapped round the other surfaces.

In the above technical solution, the insulating member 4 and the support 3 jointly wrapped around the circumference of the active substance-coated part 21 can completely separate the active substance-coated part 21 from the housing 11, reduce the exposure of the active substance-coated part 21, reduce the failure and damage risks of the battery cell assembly 2, and improve the reliability and stability of the battery cell 10. Also, the configuration can reduce the size of the insulating member 4 and the cost of the insulating member 4. In addition, the insulating member 4 can be stabilized and protected by the support 3, so as to fully ensure the reliability and stability of the battery cell 10.

It should be noted that in the embodiments of the present application, the active substance-coated part 21 includes a positive electrode active substance-coated part and a negative electrode active substance-coated part. The positive electrode active substance-coated part includes the part in which the positive electrode current collector is coated with the positive electrode active substance layer, and the negative electrode active substance-coated part includes the part in which the negative electrode current collector is coated with the negative electrode active substance layer. The conductive part 22 is divided into a positive electrode conductive part and a negative electrode conductive part. The positive electrode conductive part electrically connects the positive electrode active substance-coated part and the positive electrode post terminal, and the negative electrode conductive part electrically connects the negative electrode active substance-coated part and the negative electrode post terminal.

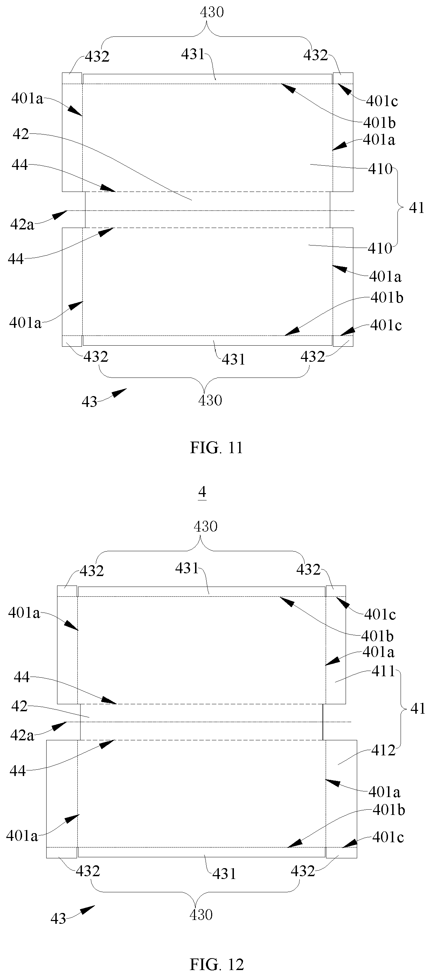

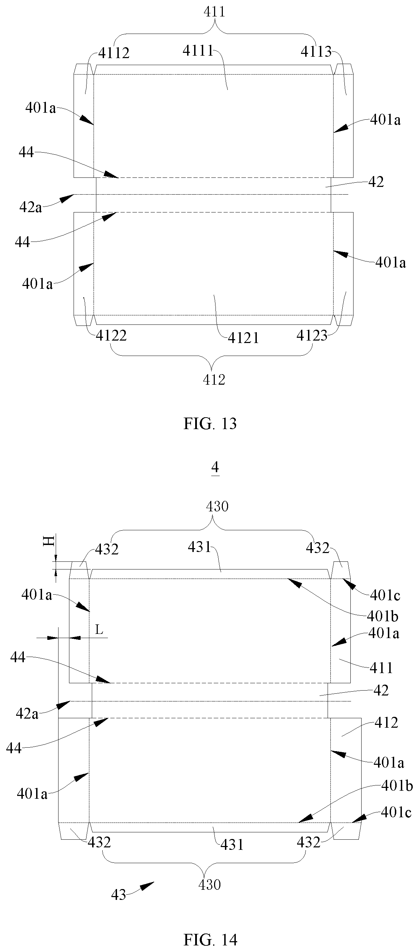

Referring to FIGs. 11-13, FIG. 11 is a structural schematic view of an unfolded insulating member of a battery cell according to some embodiments of the present application. FIG. 12 is a structural schematic view of an unfolded insulating member of a battery cell according to some other embodiments of the present application. FIG. 11 is a structural schematic view of an unfolded insulating member of a battery cell according to yet some other embodiments of the present application. FIG. 13 is a structural schematic view of an unfolded insulating member of a battery cell according to yet some other embodiments of the present application. In the embodiments of the present application, the insulating member 4 is configured with an unfolded state and a wrapped state. When the insulating member 4 is in the unfolded state, the insulating member 4 is not wrapped around the battery cell assembly 2, and the insulating member 4 is of a planar structure. When the insulating member 4 is in the wrapped state, the insulating member 4 and the support 3 are jointly wrapped around the circumference of the active substance-coated part 21. The configuration of the insulating member 4 in the unfolded state into a planar structure may facilitate wrapping the insulating member 4 around the battery cell assembly 2 and the transition of the insulating member 4 to the wrapped state, which can improve the assembly convenience of the battery cell 10.

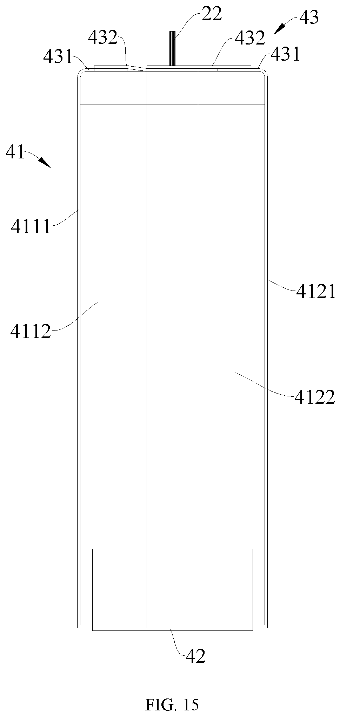

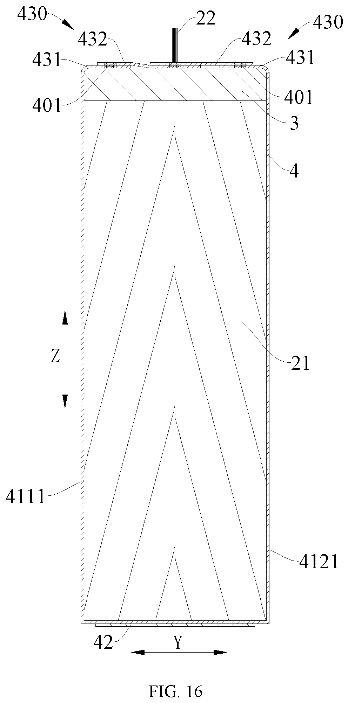

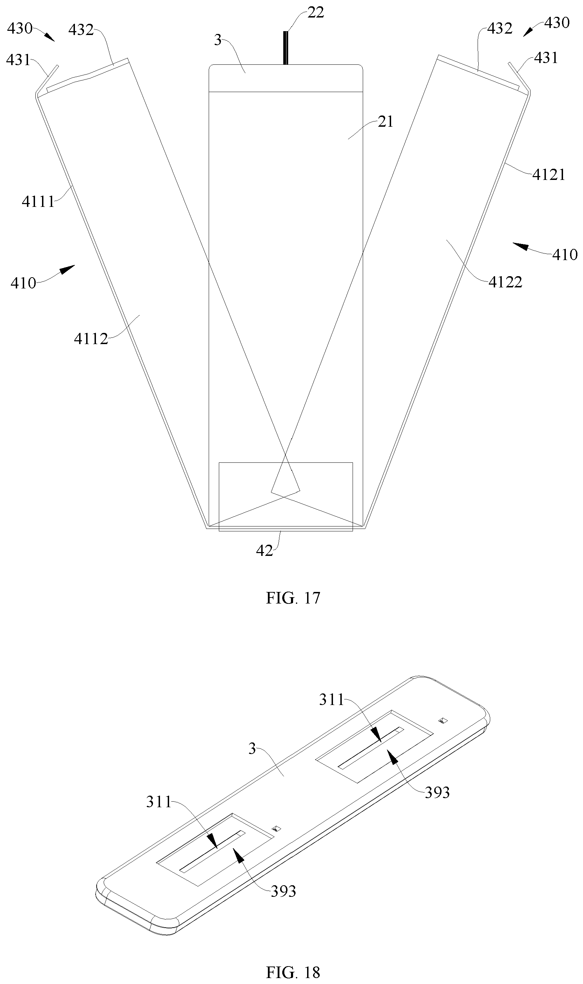

Referring to FIGs. 15-17, FIG. 15 is a structural schematic view of a wrapped insulating member of a battery cell according to some embodiments of the present application. FIG. 16 is a cross-sectional view of the battery cell shown in FIG. 15. FIG. 17 is a structural schematic view of an insulating member of a battery cell before being wrapped around the battery cell assembly according to some embodiments of the present application. In the embodiments of the present application, the insulating member 4 includes a body insulating part 41, a first insulating part 42, and a second insulating part 43, and the first insulating part 42 and the second insulating part 43 are separately arranged at the two ends of the body insulating part 41. The body insulating part 41 is wrapped around the circumference of the active substance-coated part 21; the first insulating part 42 is located on the side of the body insulating part 41 distal to the support 3 and wrapped around the end portion of the active substance-coated part 21 distal to the support 3, and the second insulating part 43 is located on the side of the body insulating part 41 proximal to the support 3, fits the support 3, and is, along with the support 3, wrapped around the end portion of the active substance-coated part 21 proximal to the support 3.

The cross-section of the active substance-coated part 21 may be circular, rectangular, polygonal, or the like. When the cross-section of the active substance-coated part 21 is circular, the body insulating part 41 may be wrapped into a shape adaptive to the shape of the circumference (cylindrical surface) of the active substance-coated part 21 to cover the circumference of the active substance-coated part 21. That is, the cross-sectional shape of the body insulating part 41 is a circular ring shape. When the cross-section of the active substance-coated part 21 is rectangular, the body insulating part 41 may be folded into a shape adaptive to the shape of the circumference (four side wall surfaces) of the active substance-coated part 21 to cover the circumference of the active substance-coated part 21. That is, the cross-sectional shape of the body insulating part 41 is a rectangular ring shape. When the cross-section of the active substance-coated part 21 is polygonal, the body insulating part 41 may be folded into a shape adaptive to the shape of the circumference (a number of side wall surfaces) of the active substance-coated part 21 to cover the circumference of the active substance-coated part 21. That is, the cross-sectional shape of the body insulating part 41 is a polygonal ring shape.

Referring to FIGs. 15-17, when the battery cell 10 is placed vertically, the support 3 is arranged on the upper side of the active substance-coated part 21 (the side indicated by the upward arrow in the Z direction of the active substance-coated part 21), and the conductive part 22 penetrates through the support 3. The body insulating part 41 is wrapped around the circumference of the active substance-coated part 21, and the first insulating part 42 is wrapped around the lower side of the active substance-coated part 21 (the side indicated by the downward arrow in the Z direction of the active substance-coated part 21). Referring to FIGs. 8-10 again, the second insulating part 43 and the support 3 are jointly wrapped around the upper side of the active substance-coated part 21. As such, the insulating member 4 is composed of a plurality of portions, and the plurality of portions and the support 3 can be jointly wrapped around the side portion, the bottom portion, and the top portion of the active substance-coated part 21, and can completely separate the active substance-coated part 21 from the housing 11, so as to adequately reduce the exposure of the active substance-coated part 21, reduce the failure and damage risks of the battery cell assembly 2, reduce the corrosion risk of the housing 11, and improve the reliability and stability of the battery cell 10.

Referring to FIGs. 11 and 17 again, in the embodiments of the present application, the body insulating part 41 may include a plurality of body parts 410; and the plurality of body parts 410 are connected end-to-end in sequence in a ring shape, the plurality of body parts 410 jointly wrap the circumference of the active substance-coated part 21, and the first insulating part 42 and the second insulating part 43 are separately located at the two ends of the ring-shaped structure formed by the plurality of body parts 410.

Specifically, the number of the body parts 410 may be two, three, or more than three, and may be selected according to the shape of the active substance-coated part 21. For example, the number of the body parts 410 and the number of the surfaces of the circumference of the active substance-coated part 21 may be configured in a one-to-one correspondence. That is, the plurality of body parts 410 cover the plurality of surfaces of the circumference of the active substance-coated part in a one-to-one correspondence. For another example, the number of the body parts 410 may be less than the number of the surfaces of the circumference of the active substance-coated part 21. That is, when the insulating member 4 is in the unfolded state, the surface area of the at least one body part 410 is greater than the surface area of one surface of the circumference of the active substance-coated part 21, such that the body part 410 can be configured to cover two or more surfaces of the circumference of the active substance-coated part 21. For yet another example, the number of the body parts 410 may be greater than the number of the surfaces of the circumference of the active substance-coated part 21, such that at least a part of the plurality of body parts 410 may overlap.

The ring shape of the connected body parts 410 can completely be wrapped around the circumference of the active substance-coated part 21, such that the circumference of the active substance-coated part 21 is completely separated from the inner wall of the housing 11, thereby reducing the exposure risk of the active substance-coated part 21 and improving the reliability and stability of the battery cell 10.

As an optional solution, in the embodiments of the present application, connection positions of any two adjacent body parts 410 partially overlap. In the above technical solution, the overlapping of the connection positions of the body parts 410 can prevent the separation and disconnection of the connection positions, reduce the probability and risk of insulation failure at the overlapping position of the two, and improve the reliability of the battery cell assembly 2, so as to improve the stability and reliability of the battery cell 10. Also, the overlapping of the connection positions of the body parts 410 can adequately ensure that the entire insulating member 4 can be wrapped around the circumference of the active substance-coated part 21 and adequately reduce the exposure of the active substance-coated part 21 and the corrosion risk of the housing 11, so as to further improve the reliability and stability of the battery cell assembly 2 and the battery cell 10.

Further optionally, in the embodiments of the present application, the circumference of the active substance-coated part 21 is provided with a plurality of surfaces, referring to FIG. 13 again, each body part 410 includes a body surface and two flanges that are arranged on two sides of the body surface, any two adjacent body parts 410 are connected via the flanges, and each of the body surfaces or a connection structure of every two flanges covers a different surface on the circumference of the active substance-coated part 21.

Specifically, the circumference of the active substance-coated part 21 may be provided with four surfaces, six surfaces, or more surfaces. In the embodiment where the circumference of the active substance-coated part 21 is provided with four surfaces, the number of the body parts 410 may be two, and the body surfaces of the two body parts 410 may cover two surfaces of the active substance-coated part 21 arranged opposite to each other. The flanges of the two body parts 410 on the same side are connected together to cover the other surfaces of the active substance-coated part 21.

In the embodiment where the circumference of the active substance-coated part 21 is provided with six surfaces, for the convenience of description, the circumference of the active substance-coated part 21 may be defined as being provided with three first surfaces and three second surfaces, and the three first surfaces and the three second surfaces are alternately arranged in the circumferential direction of the active substance-coated part. That is, one second surface is arranged between two adjacent first surfaces, and one first surface is arranged between two adjacent second surfaces. Correspondingly, the number of the body parts 410 may be three, and the body surfaces of the three body parts 410 may separately cover the three first surfaces of the active substance-coated part 21 spaced apart from each other, and the flanges of two adjacent body parts 410 are connected together and may cover the second surfaces of the active substance-coated part 21.

In the above technical solution, connecting any two adjacent body parts 410 by the flanges can ensure the connection reliability, so as to improve the reliability and stability of the battery cell assembly 2 and the battery cell 10. Also, the body surfaces and the connection positions of every two flanges cover different surfaces of the circumference of the active substance-coated part 21, such that each surface of the circumference of the active substance-coated part 21 can be effectively covered, thus further improving the reliability of the battery cell assembly 2 to improve the stability and reliability of the battery cell 10.

Referring to FIG. 13 again, the widths of the flanges of the plurality of body parts 410 may be equal, or the widths of the flanges of the plurality of body parts 410 may be unequal. For example, as shown in FIG. 14, in this embodiment, the width difference of the flanges on the same side of two adjacent body parts 410 may be L, and L is greater than zero.

More specifically, referring to FIGs. 8-10 again, in some embodiments, the circumference of the active substance-coated part 21 is provided with four surfaces. That is, the outer contour cross-sectional shape of the active substance-coated part 21 is quadrilateral.

Referring to FIGs. 11 and 12 again, the body insulating part 41 includes two body parts 410. The two body parts 410 are arranged on two sides of the first insulating part 42. The two body parts 410 are a first body part 411 and a second body part 412. As shown in FIG. 13, the first body part 411 includes a first body surface 4111, a first flange 4112, and a second flange 4113. The first flange 4112 and the second flange 4113 are separately arranged on two sides of the first body surface 4111. The second body part 412 includes a second body surface 4121, a third flange 4122, and a fourth flange 4123. The third flange 4122 and the fourth flange 4123 are separately arranged on two sides of the second body surface 4121.

Referring to FIGs. 15 and 17, the first flange 4112 is connected to the third flange 4122, and the second flange 4113 is connected to the fourth flange 4123; the first body surface 4111, the connection structure of the first flange 4112 and the third flange 4122, the second body surface 4121, and the connection structure of the second flange 4113 and the fourth flange 4123 separately cover the four surfaces arranged in sequence on the circumference of the active substance-coated part 21.

In order to clearly describe the structure of the first body part 411 and the second body part 412, four auxiliary lines are made in FIG. 13, i.e., four first boundaries 401a. Two of the first boundaries 401a divide the first body part 411 into the first body surface 4111, the first flange 4112, and the second flange 4113, and the other two first boundaries 401a divide the second body part 412 into the second body surface 4121, the third flange 4122, and the fourth flange 4123.

Specifically, when the insulating member 4 is in the unfolded state, one end of the first body surface 4111 in the width direction and one end of the second body surface 4121 in the width direction are connected through the first insulating part 42, and one end of the first body surface 4111 in the length direction is provided with the first flange 4112 and the other end is provided with the second flange 4113. That is, the first body surface 4111 spaces the first flange 4112 and the second flange 4113 apart. One end of the second body surface 4121 in the length direction is provided with the third flange 4122 and the other end is provided with the fourth flange 4123. That is, the second body surface 4121 spaces the third flange 4122 from the fourth flange 4123 apart.

Referring to FIGs. 8-10 and FIGs. 15-17 again, when the insulating member 4 is in the wrapped state, the first flange 4112 is connected to the third flange 4122, and the second flange 4113 is connected to the fourth flange 4123, such that the first body surface 4111, the connection structure of the first flange 4112 and the third flange 4122, the second body surface 4121, and the connection structure of the second flange 4113 and the fourth flange 4123 form a ring-shaped structure. As such, the first body surface 4111 and the second body surface 4121 can separately cover two surfaces of the active substance-coated part 21 arranged opposite to each other, and the connection structure of the first flange 4112 and the third flange 4122 and the connection structure of the second flange 4113 and the fourth flange 4123 can separately cover the other two surfaces of the active substance-coated part 21 arranged opposite to each other.

In the embodiments of the present application, the circumference of the active substance-coated part 21 is provided with four surfaces, i.e., two large surfaces arranged opposite to each other and two small surfaces arranged opposite to each other. The first body surface 4111 and the second body surface 4121 separately cover the two large surfaces on the circumference of the active substance-coated part 21 arranged opposite to each other. The first flange 4112 and the third flange 4122 are connected and cover one small surface on the circumference of the active substance-coated part 21. The second flange 4113 and the fourth flange 4123 are connected and cover the other small surface on the circumference of the active substance-coated part 21. The first insulating part 42 is wrapped around the end portion of the active substance-coated part 21 distal to the support 3. The second insulating part 43 fits the support 3, and the second insulating part 43 and the support 3 are jointly wrapped around the end portion of the active substance-coated part 21 proximal to the support 3.

When the circumference of the active substance-coated part 21 is provided with the four surfaces, the battery cell 10 is generally in a square shape. In this case, the first body part 411, the second body part 412, and the connection structures thereof can completely cover the four surfaces of the circumference of the active substance-coated part 21, such that the four surfaces of the circumference of the active substance-coated part 21 are completely separated from the inner wall of the housing, thereby reducing the exposure risk of the active substance-coated part 21 and adequately improving the reliability and stability of the square battery cell 10.

Referring to FIGs. 11-13 again, in some embodiments, the first insulating part 42 is provided with a center line 42a, and the first body part 411 and the second body part 412 are separately located on the two sides of the center line 42a of the first insulating part 42; around the center line 42a, the first body part 411 and the second body part 412 are arranged in mirror images, or the first body surface 4111 and the second body surface 4121 are arranged in mirror images.

Specifically, in the process of wrapping the insulating member 4 around the battery cell assembly 2, one body part 410 of the insulating member 4 can first cover one surface of the circumference of the active substance-coated part 21, and then the other body part 410 of the insulating member 4 can cover the other surface of the circumference of the active substance-coated part 21. The two body parts 410 first cover the two surfaces of the circumference of the active substance-coated part 21 arranged opposite to each other, before subsequent wrapping procedures are performed. The wrapping direction may also be reversed to perform wrapping, thereby providing ease of operation and helping improve the production efficiency.

The completely mirror-image configuration of the two body parts 410 may facilitate the mold opening procedure and the manufacture of the insulating member 4, and improve the cost-efficiency and production efficiency. When the two body surfaces are arranged in mirror images, the flanges of the two body parts 410 may not be arranged in mirror images. In this case, the flanges of one body part 410 may be arranged longer, and the flanges of the adjacent body part 410 may be arranged shorter, such that when the two body parts 410 are connected, the longer flanges may cover the shorter flanges, so as to reduce the exposure risk of the active substance-coated part 21 and the corrosion risk of the housing 11 while saving the costs, thereby fully improving the reliability and stability of the square battery cell 10.

Certainly, when the insulating member 4 is in the unfolded state, the insulating member 4 may be of a non-axisymmetric structure, and the insulating member 4 may be cut as needed, which is not limited in the embodiments of the present application.

Referring to FIGs. 11 and 15-17 again, in the embodiments of the present application, the second insulating part 43 includes a plurality of insulating sub-parts 430, and the plurality of insulating sub-parts 430 are connected to the plurality of body parts 410 in a one-to-one correspondence; any two adjacent insulating sub-parts 430 partially overlap.

Specifically, when the insulating member 4 is in the wrapped state, the plurality of insulating sub-parts 430 of the second insulating part 43 are located on the wall surface of the support 3 distal to the active substance-coated part 21 and arranged in the circumferential direction of the support 3, and any two adjacent insulating sub-parts 430 partially overlap, such that the plurality of insulating sub-parts 430 are connected to form a ring-shaped second insulating part 43, which effectively reduces the corrosion of the housing 11 due to the exposure of the active substance-coated part 21.

When the battery cell assembly 2 with the support 3 is loaded into the housing 11, the support 3 enters the housing 11 first. Since the second insulating part 43 is located on the wall surface of the support 3 distal to the active substance-coated part 21, the insulating member 4 can enter the housing 11 in the housing direction, and the housing 11 will not scratch the edge of the insulating member 4, thereby reducing the movement and slippage of the insulating member 4. After the support 3 and the battery cell assembly 2 are mounted in place in the housing 11, the second insulating member 43 is pressed between a wall surface of the housing 11 opposite to an opening 1110 and the support 3, which can further reduce the fall-off risk of the insulating member 4, the corrosion risk of the housing 11 due to the exposure of the active substance-coated part 21, thereby facilitating the mounting.

Referring to FIG. 11 again, the plurality of insulating sub-parts 430 of the second insulating part 43 may be configured with equal widths. Referring to FIG. 12, the plurality of insulating sub-parts 430 of the second insulating part 43 may be configured with unequal widths, which may be specifically selected according to actual needs.

Referring to FIG. 14 again, each of the insulating sub-parts 430 includes a main surface 431 and two sub-surfaces 432; the main surface 431 is connected to the body surface of the corresponding body part 410, and the two sub-surfaces 432 are separately connected to the two flanges of the corresponding body part 410; two sub-surfaces 432 corresponding to any two adjacent flanges are connected, and each of the sub-surfaces 432 is connected to the adjacent main surface 431.

In order to clearly describe the structure of the first body part 411 and the second body part 412, auxiliary lines are made in FIG. 14, i.e., first boundaries 401a, second boundaries 401b, and third boundaries 401c. Two of the first boundaries 401a divide the first body part 411 into the first body surface 4111, the first flange 4112, and the second flange 4113, and the other two first boundaries 401a divide the second body part 412 into the second body surface 4121, the third flange 4122, and the fourth flange 4123. The second boundaries 401b are boundaries of the main surface 431 of the second insulating part 43 and the first body surface 4111/the second body surface 4121. The four third boundaries 401c are boundaries of the first flange 4112, the second flange 4113, the third flange 4122, the fourth flange 4123, and the four corresponding sub-surfaces 432.

In the above technical solution, the arrangement of the main surface 431 and the sub-surfaces 432 may facilitate wrapping the insulating member 4 around the outer side of the battery cell assembly 2, thus ensuring the efficiency and cost-efficiency of manufacture and assembly.

In some embodiments, the two sub-surfaces 432 corresponding to any two adjacent flanges partially overlap; and/or, each of the sub-surfaces 432 partially overlaps with the adjacent main surface 431.

Specifically, when the insulating member 4 and the support 3 are jointly wrapped around the active substance-coated part 21, one of two adjacent sub-surfaces 432 can cover a part of the other one; at least a part of the main surface 431 may cover the outer sides of the two sub-surfaces 432, or, at least a part of the two sub-surfaces 432 may cover the outer side of the main surface 431.

Either the overlapping of the two sub-surfaces 432 or the overlapping of the sub-surface 432 with the adjacent main surface 431 can adequately ensure a firm fit of the entire insulating member 4 to the support 3, such that the entire insulating member 4 and the support 3 can fit and be wrapped around the circumference of the active substance-coated part 21, thereby adequately reducing the exposure of the active substance-coated part 21 and the corrosion risk of the housing 11 and improving the stability and reliability of the battery cell 10.

Referring to FIGs. 13 and 14 again, in some embodiments, when the insulating sub-part 430 is in the unfolded state, the edge of the sub-surface 432 adjacent to the main surface 431 is a bevel edge; and/or the edge of the main surface 431 adjacent to the sub-surface 432 is a bevel edge. In some other embodiments, the sub-surface 432 is in a square, triangular, or trapezoidal shape, and the main surface 431 is correspondingly in a square, triangular, or trapezoidal shape.

In other words, when the insulating member 4 is in the wrapped state, the edge of one end of the insulating sub-part 430 in the length direction is retracted inwards relative to the edge of the support 3 to prevent the insulating sub-part 430 from exceeding the edge of the support 3, thereby reducing the probability of the housing 11 scratching the edge of the insulating member 4.

The width of the main surface 431 and the width of the sub-surface 432 may be equal or unequal. For example, as shown in FIG. 14, in this embodiment, the difference between the width of the sub-surface 432 and the width of the main surface 431 is H, and H is greater than zero.

In some embodiments, a connection position of the body insulating part 41 and the first insulating part 42 is provided with a score 44; and/or a connection position of the body insulating part 41 and the second insulating part 43 is provided with a score 44. The score 44 here is a boundary structure between the body insulating part 41 and the first insulating part 42/second insulating part 43, and may be pressed by a creasing machine or other devices after the insulating member 4 is manufactured, so to reduce the thickness of the insulating member 4 at the score 44, or may be pre-formed in the process of manufacturing the insulating member 4.

In the above technical solution, the arrangement of the score 44 may facilitate folding the insulating member 4 to easily wrap same around the active substance-coated part 21, which is beneficial to improving the efficiency and cost-efficiency of production and manufacture. Also, such an arrangement can reduce errors in the process of wrapping the insulating member 4 around the active substance-coated part 21 and can improve the wrapping accuracy and reliability of the insulating member 4 and the support 3, so as to further improve the stability and reliability of the battery cell 10.

Referring to FIGs. 8-11 again, in order to facilitate the connection of the conductive part 22 to the post terminal 12 from the side of the active substance-coated part 21 proximal to the support 3, in the embodiments of the present application, the support 3 is provided with a via hole 311, and the conductive part 22 passes through the via hole 311 and is connected to the post terminal 12, and can be connected to the post terminal 12 on the housing 11. The shape of the via hole 311 can be selected according to the shape of the conductive part 22.

In the above technical solution, the arrangement of the via hole 311 in the support 3 allows the support 3 to gather and accommodate the conductive part 22, thus facilitating the connection of the conductive part 22 to the post terminal 12 and improving the assembly reliability and convenience of the battery cell 10. Also, the support 3 gathers the conductive part 22, which can reduce the number of plastic members in the battery cell 10, achieve the insulation between the entire battery cell assembly 2 and the housing 11 through the fit of the support 3 and the insulating member 4, and effectively reduce the manufacture and production costs.

In some embodiments of the present application, the support 3 may be of an integrated structure or a split-type structure. Referring to FIG. 18, FIG. 18 is a structural schematic view of a support 3 of a battery cell 10 according to some embodiments of the present application. When the support 3 is of an integrated structure, the via hole 311 is formed in the form of a through hole through the support 3. The integrated structure of the support 3 may provide ease to process and good reliability and facilitate the assembly of the support 3 with the housing 11 and the post terminal 12, thereby improving the assembly efficiency and fitting stability. It will be appreciated that how to process the support 3 can be specifically selected according to the material of the support 3. For example, when the support 3 is an insulating plastic member, the support 3 of an integrated structure may be obtained by injection molding.

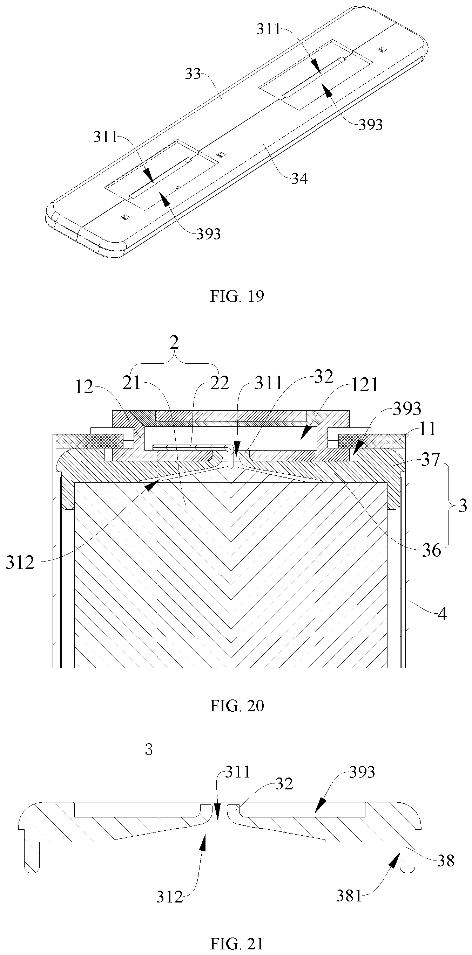

Referring to FIG. 19, FIG. 19 is a structural schematic view of a support 3 of a battery cell 10 according to some other embodiments of the present application. When the support 3 is of a split-type structure, the support 3 may include a first support 33 and a second support 34 that are separately formed, and the first support 33 and the second support 34 define the via hole 311 therebetween.

In the embodiments of the present application, the first support 33 and the second support 34 are both of an elongated plate-shaped structure, and can be detachably connected. For example, the two may be in plug-in fit or snap-fit to facilitate the assembly. At the same time, the side of the first support 33 proximal to the second support 34 is provided with a semi-hole structure, and the side of the second support 34 proximal to the first support 33 is also provided with another semi-hole structure of an adaptive shape. The semi-hole structure of the first support 33 and the semi-hole structure of the second support 34 together define the ring-shaped via hole 311. That is, the first support 33 and the second support 34 define the via hole 311 therebetween.

In the above technical solution, the first support 33 and the second support 34 fitting and defining the via hole 311 therebetween, when the support 3 is assembled with the battery cell assembly 2, does not require passing the conductive part 22 through the via hole 311 from one end to the other, but clamps the conductive part 22 by assembling the first support 33 and the second support 34 at the position of the conductive part 22, such that the via hole 311 surrounds the conductive part 22, which facilitates the assembly of the support 3 and the battery cell assembly 2 and improves the assembly efficiency.

As an optional solution, when the cross-section of the via hole 311 is in an elongated shape, the first support 33 and the second support 34 are separately arranged on the two sides of the via hole 311 in the width direction. For example, if the width direction of the via hole 311 is the left-right direction, the first support 33 and the second support 34 are located on the left and right sides of the via hole 311, so as to facilitate the fit of the first support 33, the second support 34, and the conductive part 22.

Referring to FIG. 20, FIG. 20 is a partial cross-sectional view of a battery cell according to some embodiments of the present application. A receiving groove 393 in communication with the via hole 311 is arranged on the side of the support 3 distal to the active substance-coated part 21 and accommodates at least a part of the post terminal 12. The shape of the receiving groove 393 may match the shape of the post terminal 12.

In the above technical solution, accommodating at least a part of the post terminal 12 in the receiving groove 393 makes the structure of the entire battery cell 10 more compact and reliable, which is conducive to improving the energy density of the entire battery. Also, the arrangement of the receiving groove 393 enables the insulation of the post terminal 12 from a part of the housing 11 via the support 3, so as to further improve the stability and reliability of the battery cell 10. In addition, accommodating the post terminal 12 in the receiving groove 393 may also improve the stability and reliability of the post terminal 12, thereby ensuring the stability and reliability of the battery cell 10 in the charging and discharging process.

Referring to FIG. 21, FIG. 21 is a cross-sectional view of a support of the battery cell according to some embodiments of the present application. A guiding part 32 is arranged on the side of the support 3 distal to the active substance-coated part 21. The guiding part 32 defines in an enclosing manner the circumferential direction of the via hole 311, and extends in a direction toward the post terminal 12.

In some embodiments, the guiding part 32 may be an annular boss extending in the circumferential direction of the via hole 311. In some other embodiments, the guiding part 32 may include two boss structures arranged opposite to each other and located on two opposite sides of the via hole 311. For example, the via hole 311 may be formed as an elongated hole. The two boss structures may be arranged opposite to each other in the width direction of the elongated hole and both extend in the length direction of the elongated hole.

When the conductive part 22 penetrates through the via hole 311, the guiding part 32 can restrain, gather, and support the conductive part 22, so as to facilitate the connection of the conductive part 22 to the post terminal 12 and improving the assembly efficiency and assembly quality of the battery cell 10.

Referring to FIG. 21 again, according to some embodiments of the present application, a guiding groove 312 in communication with the via hole 311 is formed on the side of the support 3 proximal to the active substance-coated part 21 and accommodates at least a part of the conductive part 22; the cross-sectional area of the guiding groove 312 gradually increases in a direction from the support 3 to the active substance-coated part 21.

Specifically, a wall of the guiding groove 312 can be an inclined surface or an arc-shaped surface extending in a direction toward the active substance-coated part 21 from the inside to the outside. The "inside" herein refers to a position proximal to the center of the guiding groove 312, and conversely, the "outside" herein refers to a position distal to the center of the guiding groove 312, i.e., a position proximal to the edge of the guiding groove 312.

The guiding groove 312 can accommodate the conductive part 22 and provide clearance for the conductive part 22 to avoid crushing the conductive part 22, reduce the fluffing and folding probabilities in the conductive part 22, and reduce redundancy.

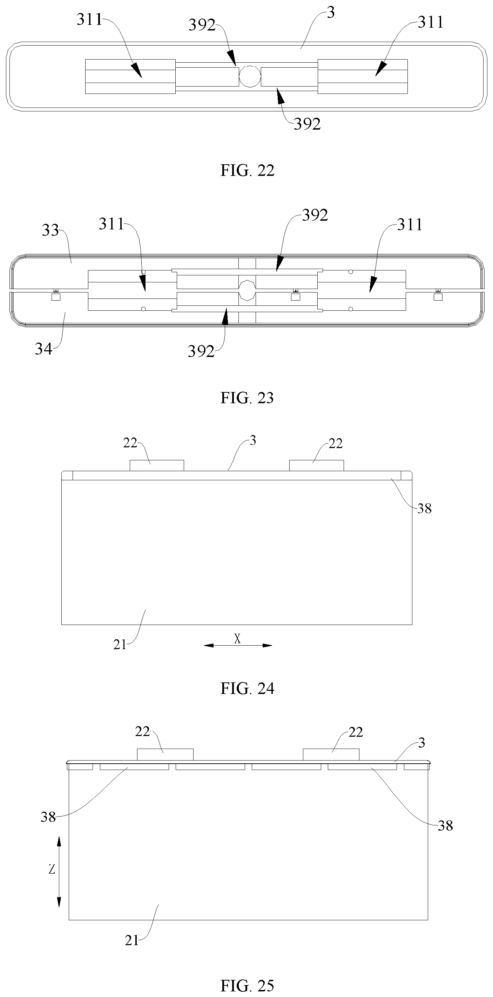

Referring to FIGs. 22 and 23, FIG. 22 is a top view of a support of a battery cell according to some embodiments of the present application. FIG. 23 is a top view of a support of a battery cell according to some other embodiments of the present application. The support 3 is provided with at least one first liquid injection guide groove 392, and the first liquid injection guide groove 392 is located on the side of the support 3 proximal to the active substance-coated part 21.

During the injection, the electrolyte can flow along the first liquid injection guide groove 392. The first liquid injection guide groove 392 can increase the fluidity of the electrolyte, increase the injection speed, and reduce the formation and standing time. In addition, the arrangement of the first liquid injection guide groove 392 increases the contact area between the electrolyte and the active substance-coated part 21, which can reduce the problem of poor wetting of the active substance-coated part 21.

The at least one first liquid injection guide groove 392 is in communication with the guiding groove 312, and the electrolyte entering the housing 11 can flow along the first liquid injection guide groove 392 toward the guiding groove 312, such that the electrolyte can flow to a predetermined position, thereby further increasing the contact area between the electrolyte and the active substance-coated part 21.

Referring to FIG. 22 again, in the embodiment where the support 3 is of an integrated structure and two post terminals 12 are arranged on the housing 11, the two ends of the first liquid injection guide groove 392 may separately correspond to the positions of the two post terminals 12, and the two ends of the first liquid injection guide groove 392 are separately in communication with the two guiding grooves 312; the electrolyte can flow along the first liquid injection guide groove 392 toward the two guiding grooves 312.

Referring to FIG. 23 again, in the embodiment where the support 3 is of a split-type structure and two post terminals 12 are arranged on the housing 11, the support 3 may include a first support 33 and a second support 34 that are separately formed, and the first support 33 and the second support 34 define the via hole 311 therebetween. At least one first liquid injection guide groove 392 is formed on each of the first support 33 and the second support 34, the two ends of each first liquid injection guide groove 392 may separately correspond to the positions of the two post terminals 12, and the two ends of the first liquid injection guide groove 392 are separately in communication with the two guiding grooves 312; the electrolyte can flow along the first liquid injection guide groove 392 toward the two guiding grooves 312.

According to some embodiments of the present application, a second liquid injection guide groove (not shown in the drawings) may also be arranged on the support 3 as needed. The second liquid injection guide groove is located on the side of the support 3 distal to the battery cell assembly 2. Such an arrangement allows, during the injection, the electrolyte to flow along the first liquid injection guide groove 392 and/or the second liquid injection guide groove, and can thus increase the fluidity of the electrolyte, improve the injection speed, and reduce the formation and standing time.

It should be noted that in the embodiments of the present application, the depth of the first liquid injection guide groove 392 and/or the second liquid injection guide groove is greater than or equal to 0.1 mm. For example, the depth of the first liquid injection guide groove 392 and the second liquid injection guide groove can be 0.1 mm, 0.2 mm, 0.5 mm, etc., and can be specifically selected according to actual needs.

Referring to FIGs. 24 and 25, FIG. 24 is a front view of a battery cell according to some embodiments of the present application. FIG. 25 is a front view of a battery cell according to some other embodiments of the present application. A limiting protruding part 38 is arranged on one side of the support 3 and in snap-fit with the battery cell assembly 2.

For example, in the embodiments of the present application, the limiting protruding part 38 may be annularly arranged on the circumference of the battery cell assembly 2, such that the limiting protruding part 38 is in snap-fit with the battery cell assembly 2. For another example, the limiting protruding part 38 can abut against an end portion of the battery cell assembly 2. For ease of understanding, the battery cell assembly 2 can be defined as being provided with a first end 201 and a second end 202 arranged opposite to each other, and the limiting protruding part 38 stops the battery cell assembly 2 at the outer side of the side wall proximal to the first end 201. In the process of loading the battery cell assembly 2 with the support 3 into the housing 11, the first end 201 of the battery cell assembly 2 with the support 3 first enters the housing 11. As the assembly process proceeds, the first end 201 of the battery cell assembly 2 gradually moves away from the opening 1110 in the housing 11. In the assembly process, the limiting protruding part 38 is located between the side wall of the battery cell assembly 2 and the housing 11. After the battery cell assembly 2 and the support 3 are mounted in place in the housing 11, the support 3 is located between the wall of the housing 11 opposite to the opening 1110 thereof and the first end 201 of the battery cell assembly 2.

By such an arrangement, the limiting protruding part 38 can restrain one end of the battery cell assembly 2, reduce the fluffing probability of the outer layer of the battery cell assembly 2, protect the end of the battery cell assembly 2, and alleviate the contact problem of the end of the battery cell assembly 2 with the housing 11, thereby alleviating the problem of the housing 11 scratching the battery cell assembly 2 in the housing process.

Referring to FIG. 24 again, the limiting protruding part 38 is formed as an annular protruding part extending in the circumferential direction of the battery cell assembly 2. In other words, the limiting protruding part 38 may be of an integrated structure and the outer side of the battery cell assembly 2 is sheathed with the limiting protruding part 38. In this way, the limiting protruding part 38 can constrain the battery cell assembly 2 in the circumferential direction of the battery cell assembly 2, which can more effectively reduce the fluffing probability of the outer layer of the battery cell assembly 2, protect the end of the battery cell assembly 2, and alleviate the contact problem of the end of the battery cell assembly 2 with the housing 11, thereby alleviating the problem of the housing 11 scratching the battery cell assembly 2.

Referring to FIG. 25 again, in some embodiments, a plurality of limiting protruding parts 38 may be present, and arranged in the circumferential direction of the battery cell assembly 2 and spaced apart from each other, and there is a gap between two adjacent limiting protruding parts 38. By such an arrangement, on the basis of restraining and protecting the battery cell assembly 2, the limiting protruding part 38 can save the materials, reduce the costs, and facilitate the assembly of the support 3 and the battery cell assembly 2.

Certainly, the arrangement manner of the plurality of limiting protruding parts 38 is not limited to the above condition, and can be specifically selected according to actual needs.

The limiting protruding part 38 is in fit with the side wall of the battery cell assembly 2; or, there is a gap between the limiting protruding part 38 and the side wall of the battery cell assembly 2. In other words, the limiting protruding part 38 may or may not be in contact with the side wall of the battery cell assembly 2. The limiting protruding part 38 stops the side wall of the battery cell assembly 2 to reduce the fluffing probability of the outer layer of the battery cell assembly 2, protect the side wall of the battery cell assembly 2, and alleviate the contact problem of the end of the battery cell assembly 2 with the housing 11.

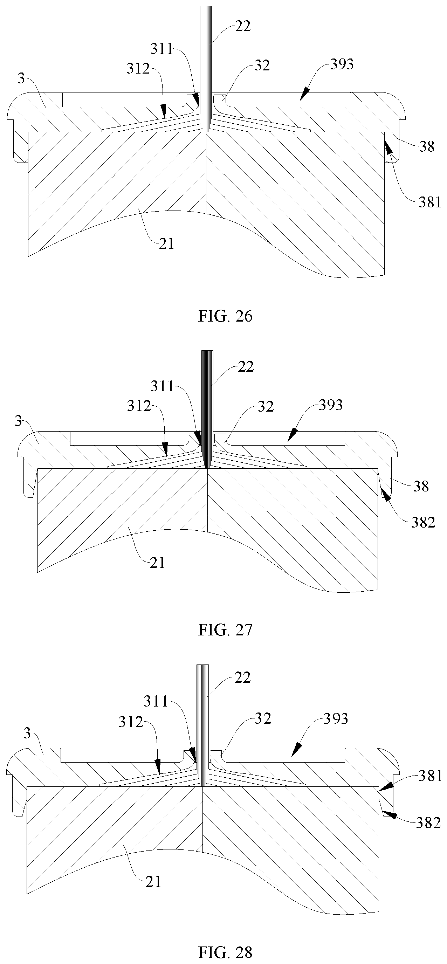

Referring to FIG. 26, FIG. 26 is a partial cross-sectional view of a battery cell 10 according to some embodiments of the present application. The surface of the limiting protruding part 38 on the side proximal to the active substance-coated part 21 may include a first surface 381, and the first surface 381 is in fit with a side wall of the active substance-coated part 21. The first surface 381 can constrain the battery cell assembly 2 to reduce the fluffing probability of the outer layer of the active substance-coated part 21, protect the side wall of the active substance-coated part 21, and alleviate the contact problem of one end of the active substance-coated part 21 with the housing 11.

Referring to FIG. 27, FIG. 27 is a partial cross-sectional view of a battery cell 10 according to some other embodiments of the present application. The surface of the limiting protruding part 38 on the side proximal to the active substance-coated part 21 may include a second surface 382, and the distance between the second surface 382 and the active substance-coated part 21 gradually increases in the direction from the support 3 to the opening 1110. That is, the second surface 382 extends obliquely in a direction away from a root portion of the limiting protruding part 38 and the side wall of the active substance-coated part 21. For example, the second surface 382 may be an inclined surface or an arc-shaped surface.

By such an arrangement, the second surface 382 can stop the side wall of the active substance-coated part 21 to reduce the fluffing probability of the outer layer of the active substance-coated part 21 and protect the side wall of the active substance-coated part 21. In addition, the second surface 382 can play a guiding role in facilitating the assembly and improving the assembly efficiency of the battery cell assembly 2 and the support 3.

Referring to FIG. 28, FIG. 28 is a partial cross-sectional view of a battery cell 10 according to yet some other embodiments of the present application. The surface of the limiting protruding part 38 on the side proximal to the active substance-coated part 21 may include the first surface 381 and the second surface 382. The first surface 381 is in fit with the side wall of the active substance-coated part 21. The distance between the second surface 382 and the active substance-coated part 21 gradually increases in the direction from the support 3 to the opening 1110. The first surface 381 is located between the root portion of the limiting protruding part 38 and the second surface 382.

Specifically, the profile of the first surface 381 may be a straight line extending vertically in the height direction of the support 3, and a contour line of the second surface 382 can be an inclined line obliquely arranged in the height direction of the support 3. Such an arrangement can provide good restraining effects on the active substance-coated part 21 and effectively reduce the fluffing probability of the outer layer of the active substance-coated part 21, while facilitating the assembly and improving the assembly efficiency of the battery cell assembly 2 and the support 3.

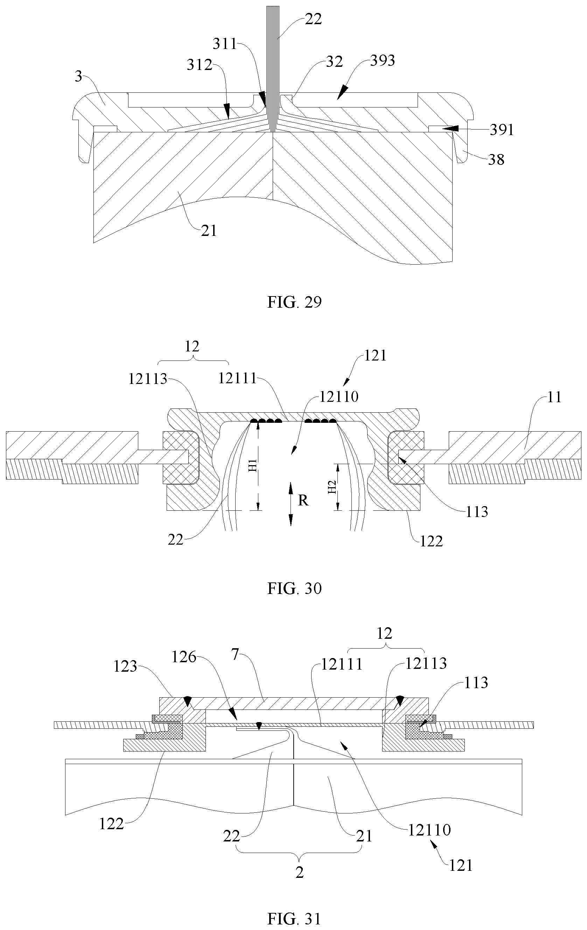

Referring to FIG. 29, FIG. 29 is a partial cross-sectional view of a battery cell according to still some other embodiments of the present application. The side of the support 3 proximal to the battery cell assembly 2 is provided with a clearance part 391 capable of providing clearance for the edge on the side of the battery cell assembly 2 proximal to the support 3, thereby reducing the risk of the support 3 crushing the battery cell assembly 2.

Specifically, in the embodiment where the support 3 is provided with the limiting protruding part 38, when the support 3 is formed, a rounded corner structure may be formed in the root portion on one side of the limiting protruding part 38 proximal to the center of the support 3. By providing the clearance part 391, the rounded corner structure can be removed to prevent the rounded corner structure from crushing the outer edge of the battery cell assembly 2. The clearance part 391 may be a groove open toward the battery cell assembly 2. For example, the groove may be an annular groove. For another example, the groove may include a plurality of grooves spaced apart from each other. The shape of the groove may be selected according to actual conditions. Certainly, the clearance part 391 may also be an inclined clearance surface or an arc-shaped clearance surface for providing clearance for the battery cell assembly 2. Any structure that can provide clearance for the battery cell assembly 2 shall fall within the claimed scope of the present application and is not specifically limited herein. In other embodiments of the present application, the side of the support 3 proximal to the battery cell assembly 2 is in complete contact with the battery cell assembly 2. That is, no clearance structure is arranged on the side of the support 3 proximal to the battery cell assembly 2.

Referring to FIG. 20 again, in the embodiments of the present application, the conductive part 22 is connected to the side of the active substance-coated part 21 proximal to the support 3, and the post terminal 12 is provided with an accommodating part 121. At least a part of the guiding part 32 extends into the accommodating part 121 so as to guide the accommodation of the conductive part 22 in the accommodating part 121, thus facilitating the electrical connection fit between the conductive part 22 and the post terminal 12. In other words, the post terminal 12 is configured into a hollow structure.

As used herein, the "at least a part" means that the conductive part 22 may be completely accommodated in the accommodating part 121, or only a part of the conductive part 22 may be accommodated in the accommodating part 121. Since the post terminal 12 is provided with the accommodating part 121, the hollow structure of the accommodating part 121 can reduce the weight of the post terminal 12 to a certain extent, so as to improve the gravimetric energy density of the battery cell 10 and the battery 100. Also, the configuration of the post terminal 12 into a hollow structure and the fit of the guiding part 32 to the hollow structure can guide the connection of the conductive part 22 to the post terminal 12, thus improving the connection reliability and ensuring the assembly efficiency and quality. In addition, the conductive part 22 can be accommodated in the accommodating part 121, which can improve the assembly efficiency of the conductive part 22, save the space occupied by the conductive part 22, and make full use of the space of the battery cell 10, thus making the fit of the support 3 to the post terminal 12 and the fit of the support 3 to the conductive part 22 closer and more reliable, making the structure of the battery cell 10 more compact, and improving the energy density of the battery cell 10.

More specifically, the conductive part 22 is partially or completely accommodated in the accommodating part 121, such that a part of the conductive part 22 located in the accommodating part 121 can occupy the space in the post terminal 12, which can reduce the space occupied by the conductive part 22 in the housing 11. In a given size of the housing 11, some space can be saved in the housing 11 to accommodate an active substance-coated part 21 with a greater size, thereby improving the volumetric energy density of the battery cell 10. For example, when the conductive part 22 is led out from the side of the active substance-coated part 21 proximal to the post terminal 12, the space occupied by the conductive part 22 between the active substance-coated part 21 and the post terminal 12 can be saved, so as to increase the size of the active substance-coated part 21 in the direction in which the conductive part 22 is led out, reduce the distance between the active substance-coated part 21 and the post terminal 12, and improve the energy density of the battery cell 10.

Also, the accommodation of at least a part of the conductive part 22 in the accommodating part 121 can reduce the space occupied by the battery cell 10, so as to accommodate a greater number of battery cells 10 in a battery 100 of a given volume and improve the volumetric energy density of the battery 100. Moreover, the accommodation of at least a part of the conductive part 22 in the accommodating part 121 to occupy the space in the post terminal 12 can reduce the redundancy of the conductive part 22 in the housing 11 to a certain extent, reduce the probability of short circuit between the conductive part 22 and the active substance-coated part 21, and reduce the probability of short circuit of the battery cell 10, thus further improving the working reliability and stability of the battery cell 10 and the battery 100. In addition, accommodating at least a part of the conductive part 22 in the accommodating part 121 may also stabilize and constrain the conductive part 22 via the accommodating part 121, so as to facilitate the proceeding of the welding procedures between the conductive part 22 and the post terminal 12.

It should be noted that in the embodiments of the present application, the accommodating part 121 may be located on the side of the post terminal 12 proximal to the active substance-coated part 21, or may be located on the side of the post terminal 12 distal to the active substance-coated part 21.

Illustratively, referring to FIGs. 30 and 31, FIG. 30 is a partial cross-sectional view of a battery cell according to some embodiments of the present application. FIG. 31 is a partial cross-sectional schematic view of a battery cell according to some embodiments of the present application. When the accommodating part 121 is located on the side of the post terminal 12 proximal to the active substance-coated part 21, the accommodating part 121 includes a first accommodating groove 12110, the surface of the post terminal 12 on the side proximal to the active substance-coated part 21 is a post terminal inner end surface 122, an opening of the first accommodating groove 12110 is formed on the post terminal inner end surface 122, and at least a part of the conductive part 22 is accommodated in the first accommodating groove 12110.

Illustratively, the first accommodating groove 12110 is a groove body, and the groove body is a groove-shaped structure having a certain depth. For example, when the post terminal 12 is arranged on the upper end wall of the housing 11 and the post terminal inner end surface 122 is the lower surface of the post terminal 12, the first accommodating groove 12110 is formed as an accommodating groove with an opening open downward and a wall recessed upward. For another example, when the post terminal 12 is arranged on the lower end wall of the housing 11 and the post terminal inner end surface 122 is the upper surface of the post terminal 12, the first accommodating groove 12110 is formed as an accommodating groove with an opening open upward and a wall recessed downward.

In the above technical solution, the provision of the first accommodating groove 12110 on the post terminal 12 can reduce the weight of the post terminal 12 to a certain extent, so as to improve the gravimetric energy density of the battery cell 10 and the battery 100. Since the opening of the first accommodating groove 12110 is formed on the post terminal inner end surface 122 and the post terminal inner end surface 122 is the surface of the post terminal 12 on the side proximal to the active substance-coated part 21, the first accommodating groove 12110 may be open toward the active substance-coated part 21, thereby facilitating the conductive part 22 to extend into the first accommodating groove 12110 and improving the assembly efficiency. Moreover, the first accommodating groove 12110 in this type facilitates processing and thus improves production efficiency.

Furthermore, it is easy to process the first accommodating groove 12110 to provide a greater volume, so as to accommodate more conductive parts 22. Also, since the first accommodating groove 12110 is open toward the active substance-coated part 21, the first accommodating groove 12110 may also serve as a buffering and temporary storage structure for the electrolyte, such that more electrolyte can be accommodated in the housing 11. Since the electrolyte will be consumed during the charging and discharging process of the battery cell 10, a greater amount of electrolyte can prolong the service life of the battery cell 10. It is also due to the fact that the first accommodating groove 12110 is open toward the active substance-coated part 21, that the first accommodating groove 12110 may also serve as an accommodating and buffering structure for gas generated inside the battery cell assembly 2, thereby reducing the expansion of the battery cell 10 and improving the reliability and stability of the battery cell 10.

In addition, as the first accommodating groove 12110 is located on the inner side of the post terminal 12, external foreign matters and impurities can hardly enter the first accommodating groove 12110, thereby reducing the impact of external foreign matters and impurities on the battery cell assembly 2, improving the working stability and reliability of the battery cell assembly 2, and further improving the stability and reliability of the battery cell 10 and the battery 100.

Referring to FIG. 30 again, in the embodiments of the present application, the connection manner between the post terminal 12 and the housing 11 is not limited. For example, the connection manner may be welding or riveting. For example, when the two are combined by riveting, the housing 11 is provided with a mounting hole 113, and the post terminal 12 is mounted by riveting at the mounting hole 113. Certainly, it will be appreciated that when the two are fitted by welding or other manners, the housing 11 may also be provided with a mounting hole 113 to allow the mounting of the post terminal 12 on the housing 11 through the mounting hole 113, which is not limited herein.

Also, the first accommodating groove 12110 may be arranged corresponding to the position of the mounting hole 113, or in other words, on the projection plane perpendicular to the axial direction R of the post terminal 12. The orthographic projection of the first accommodating groove 12110 is located within the orthographic projection range of the mounting hole 113, such that the first accommodating groove 12110 can have a greater depth to accommodate more conductive parts 22, thereby reducing the space occupied by the conductive part 22 in the housing 11 to a greater extent.

Specifically, when the mounting hole 113 is arranged on the housing 11 and the post terminal 12 is mounted in the mounting hole 113, in the axial direction R of the post terminal 12, the depth H1 of the first accommodating groove 12110 is greater than or equal to the minimum distance H2 from the post terminal inner end surface 122 to the mounting hole 113.

It should be noted that the specific shape of the first accommodating groove 12110 is not limited, and may be a regular shape or an irregular shape, e.g., a cylindrical groove with a rectangular, elliptical, or track-shaped cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. Therefore, the depth H1 of the first accommodating groove 12110 refers to: the maximum depth of the first accommodating groove 12110 in the axial direction R of the post terminal 12.

Since the depth H1 of the first accommodating groove 12110 in the axial direction R of the post terminal 12 is greater than or equal to the minimum distance H2 from the post terminal inner end surface 122 to the mounting hole 113, the volume of the post terminal 12 can be fully utilized, such that the first accommodating groove 12110 has a greater depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Also, due to the greater depth, the first accommodating groove 12110 can accommodate the gas produced by the battery cell assembly 2 to ensure the reliability and stability of the battery cell 10, and can also accommodate more electrolyte to ensure the service life of the battery cell 10.

Referring to FIGs. 30 and 31 again, in order to ensure the stability and reliability of the electrical connection between the active substance-coated part 21 and the post terminal 12, in some embodiments of the present application, the electrical connection position between the conductive part 22 and the post terminal 12 may be located on the wall of the first accommodating groove 12110 formed by the accommodating part 121.

Illustratively, the conductive part 22 and the post terminal 12 may be electrically connected by welding, and the electrical connection position is the welding position of the conductive part 22 and the post terminal 12. Meanwhile, the welding method for the conductive part 22 and the post terminal 12 is not limited, which may be laser welding, for example. Moreover, depending on factors such as the position, angle, or structure of the welding part, vertical welding or inclined welding, and overlap welding or edge sealing welding can be selected. In other embodiments of the present application, the conductive part 22 and the post terminal 12 may be electrically connected by other means instead of welding, such as by providing conductive adhesive or conductive nails. In order to simplify the description, the following description will take an example that the conductive part 22 is welded to the post terminal 12 to form an electrical connection, and that the welding position is the electrical connection position of the conductive part 22 and the post terminal 12.

Specifically, the post terminal 12 specifically includes a first end wall 12111 and a first side wall 12113, the first end wall 12111 is located on the side of the first side wall 12113 distal to the active substance-coated part 21, the first end wall 12111 and the first side wall 12113 define, in an enclosing manner, the first accommodating groove 12110, and the electrical connection position between the conductive part 22 and the post terminal 12 is located on the first end wall 12111 and/or the first side wall 12113. That is, the conductive part 22 may be welded to at least one of the first end wall 12111 and the first side wall 12113.

In the above technical solution, setting the electrical connection position between the conductive part 22 and the post terminal 12 on at least one of the first end wall 12111 and the first side wall 12113 will provide the first accommodating groove 12110 with the functionality of accommodating at least a part of the conductive part 22 and provide the wall of the first accommodating groove 12110 with the functionality of achieving the electrical connection to the conductive part 22, thereby simplifying the structure of the post terminal 12, facilitating the processing of the post terminal 12, simplifying the structure of the conductive part 22, reducing the redundancy of the conductive part 22, and reducing the cost of the conductive part 22. Moreover, utilizing the wall of the first accommodating groove 12110 to achieve the electrical connection to the conductive part 22 may allow a relatively greater area of the electrical connection between the conductive part 22 and the post terminal 12, which not only reduces the difficulty of electrical connection, but also improves the reliability and stability of the electrical connection, thereby improving the performance of the battery cell 10.

In addition, since the electrical connection position of the conductive part 22 and the post terminal 12 is located in the first accommodating groove 12110, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

In addition, in the embodiments of the present application, the first end wall 12111 is configured as a closed structure without any perforation, such that the first accommodating groove 12110 is isolated from the exterior of the housing 11, thereby avoiding the problem of electrolyte leaking in the housing 11 through the first accommodating groove 12110.

Referring to FIGs. 30 and 31 again, in some optional embodiments, the conductive part 22 and the first end wall 12111 match in partial shape, and are arranged in fit and electrically connected, such that the electrical connection position between the conductive part 22 and the first end wall 12111 extends in the length or width direction of the first end wall 12111. For example, when the first end wall 12111 is flat, a part of the conductive part 22 may also be flat and fit the first end wall 12111, and the fitting position is electrically connected, such as welded. As such, the area of the electrical connection can be increased, and the reliability and stability of the electrical connection can be improved.

In addition, when the conductive part 22 is electrically connected to the first end wall 12111 by welding, the location of the first end wall 12111 on the side of the first accommodating groove 12110 distal to the active substance-coated part 21 may facilitate the welding procedures. For example, the welding may be performed from the side of the post terminal 12 distal to the active substance-coated part 21.

It is worth noting that the shape of the first end wall 12111 is not limited, for example, to a flat-plate shape, and an arc-plate shape. When the first end wall 12111 is of a plate structure, the first end wall 12111 is arranged at an included angle with the axial direction R of the post terminal 12. For example, the first end wall may be of a plate structure perpendicular to the axial direction R of the post terminal 12, or may be of an inclined plate structure that is not perpendicular to the axial direction R of the post terminal 12, where, however, the inclination direction is not limited.

Certainly, in other embodiments of the present application, the electrical connection position of the conductive part 22 and the first end wall 12111 may not extend in the length or width direction of the first end wall 12111, and may be, for example, a plurality of discretely arranged spots. For example, the conductive part 22 is provided with a plurality of parts that are spaced apart from each other and separately welded to the first end wall 12111, which will not be described in detail herein.

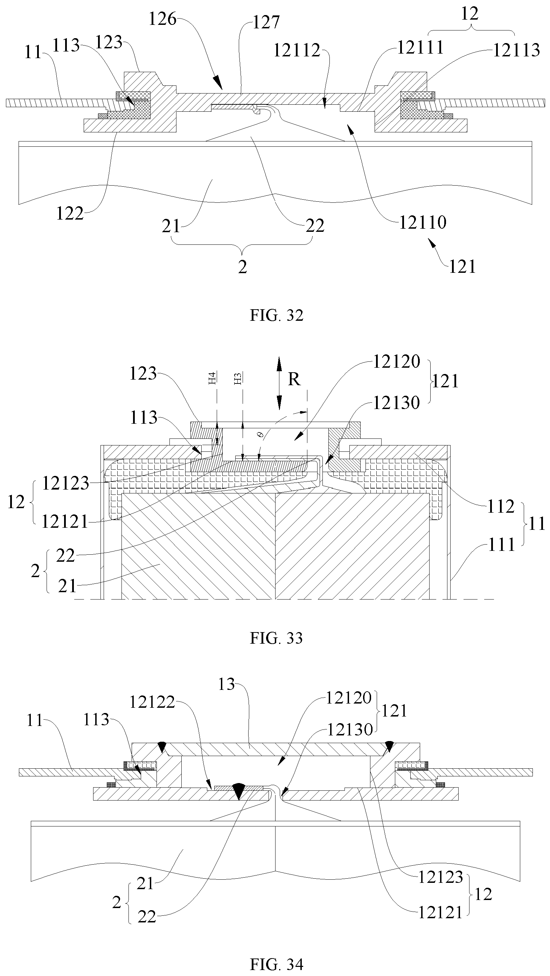

Referring to FIG. 32, FIG. 32 is a partial cross-sectional view of a battery cell according to some embodiments of the present application. When the conductive part 22 is electrically connected to the first end wall 12111, a first recess 12112 may be arranged on the first end wall 12111, and the recess direction of the first recess 12112 is away from the active substance-coated part 21. At least a part of the electrical connection position between the conductive part 22 and the first end wall 12111 is located in the first recess 12112. Illustratively, at least a part of the conductive part 22 may be arranged within the first recess 12112 and connected to a portion of the first end wall 12111 configured to define the first recess 12112.

In the above technical solution, the first recess 12112 can be used to achieve the pre-positioning and limiting of the electrical connection position of the conductive part 22, which is not only conducive to accurately finding the position to achieve the electrical connection and improve the production efficiency, but also conducive to improving the stability and reliability of the conductive part 22 and ensuring the stability and reliability of the battery cell 10 during the charging and discharging processes. Also, by arranging the first recess 12112 on the first end wall 12111, the local wall thickness of the first end wall 12111 can be locally reduced, which is not only conducive to welding, but also conducive to reducing the weight of the post terminal 12 and improving the gravimetric energy density of the battery cell 10.

Referring to FIGs. 31 and 32 again, in the embodiments of the present application, the post terminal 12 may also be provided with a first groove 126 as required, and the first groove 126 is located on the side of the post terminal 12 distal to the active substance-coated part 21. That is, the surface of the post terminal 12 on the side distal to the active substance-coated part 21 is a post terminal outer end surface 123, and an opening of the first groove 126 is formed on the post terminal outer end surface 123.

It will be appreciated that the first groove 126 is a groove body, and the groove body is a groove-shaped structure of a certain depth. Furthermore, when the post terminal 12 is arranged on the upper end wall of the housing 11 and the post terminal outer end surface 123 is the upper surface of the post terminal 12, the first groove 126 is formed as a first groove with the opening upward and the wall recessed downward (that is, recessed in a square toward the battery cell assembly 2). For another example, when the post terminal 12 is arranged on the lower end wall of the housing 11 and the post terminal outer end surface 123 is the lower surface of the post terminal 12, the first groove 126 is formed as a first groove with the opening downward and the wall recessed upward (that is, recessed in a square away from the battery cell assembly 2).

In the above technical solution, since the post terminal 12 is provided with the first groove 126, the weight of the post terminal 12 can be further reduced, such that the gravimetric energy density of the battery cell 10 and the battery 100 can be improved. Also, the first groove 126 is located on the outer side of the post terminal 12, that is, the first groove is open to the side of the post terminal 12 distal to the interior of the housing 11, and the first groove 126 can be used for accommodating or mounting structural components of the battery 100 that electrically connect various battery cells 10, so as to make full use of the space in the post terminal 12, thereby improving the space utilization and volumetric energy density of the battery 100.

In addition, since the post terminal 12 is provided with both the first accommodating groove 12110 and the first groove 126, the first groove 126 is located on the side of the first accommodating groove 12110 distal to the active substance-coated part 21, and the first groove 126 is open in a direction away from the first accommodating groove 12110, the conductive part 22 can be laser-welded to the first end wall 12111 through the first groove 126 from the outside of the post terminal 12, that is, the side of the post terminal 12 distal to the active substance-coated part 21, so as to facilitate the electrical connection between the conductive part 22 and the post terminal 12 through external welding. That is, the above structural arrangement can facilitate external welding of the post terminal 12 to the conductive part 22 through the first groove 126, which facilitates processing and manufacture of the battery cell 10 and can save processing and manufacturing costs.

Furthermore, in order to conveniently and effectively weld the conductive part 22 to the wall of the first accommodating groove 12110 through the first groove 126 and improve the reliability of the welding of the conductive part 22 to the wall of the first accommodating groove 12110, in the embodiments of the present application, the portion between the first groove 126 and the first accommodating groove 12110 can be laser welded to the conductive part 22. That is, the spacer part 127 shown in FIG. 32 can be laser welded to the conductive part 22 to achieve the electrical connection between the battery cell assembly 2 and the post terminal 12. The spacer part 127 of the post terminal 12 located between the first groove 126 and the first accommodating groove 12110 is thin. The spacer part 127 isolates the first groove 126 from the first accommodating groove 12110. The wall surface of the spacer part 127 on the side proximal to the active substance-coated part 21 can be used as the first end wall 12111. When the conductive part 22 needs to be welded to the first end wall 12111, since the spacer part 127 is thin, the welding of the conductive part 22 to the first end wall 12111 can be achieved through the first groove 126, thereby improving the convenience and reliability of welding.

In some embodiments, the first accommodating groove 12110 may be configured into a shape in which the length of the cross-section is greater than the width, such as a rectangle, an ellipse, a track shape, etc. The weld mark formed by welding the conductive part 22 and the post terminal 12 may be an elongated weld mark parallel to the length direction of the first accommodating groove 12110 to improve the welding reliability and increase the current passage performance. Illustratively, when the conductive part 22 is welded to the first end wall 12111 to form a weld mark as an elongated weld mark, the width of the weld mark may be greater than or equal to 6 mm, and the distance between the weld mark and the first side wall 12113 may be greater than or equal to 1 mm, so as to ensure the current passage capacity of the battery cell 10 while ensuring the convenience and reliability of welding.

Referring to FIG. 31 again, the battery cell 10 may further include a groove cover 7. The groove cover 7 is arranged on the post terminal 12 and closes the opening of the first groove 126.

In the above technical solution, by providing the groove cover 7 that closes the first groove 126, the post terminal 12 can be indirectly electrically connected to the busbar component through the groove cover 7. The electrical connection between the groove cover 7 and the busbar component can be more convenient and the electrical connection area can be larger through the arrangement of the position and structure of the groove cover 7. As such, arranging the groove cover 7 can facilitate the electrical connection between adjacent battery cells 10 in the battery 100, and since the electrical connection positions of the battery cells 10 are located at the groove cover 7, which can be separated from the electrical connection position of the conductive part 22 and the post terminal 12 by the first groove 126, there is less interference between the two, which can further improve the stability and reliability of the battery cell 10.

Illustratively, referring to FIG. 33, FIG. 33 is a partial cross-sectional view of a battery cell according to some embodiments of the present application. The accommodating part 121 may also be configured to include a second accommodating groove 12120, the surface of the post terminal 12 on the side distal to the active substance-coated part 21 is a post terminal outer end surface 123, an opening of the second accommodating groove 12120 is formed on the post terminal outer end surface 123, the second accommodating groove 12120 is in communication with the interior of the housing 11 through a perforation 12130, and the conductive part 22 is provided in the perforation 12130 in a penetrating manner and is at least partially accommodated in the second accommodating groove 12120.

It will be appreciated that the second accommodating groove 12120 is a groove body, and the groove body is a groove-shaped structure of a certain depth. For example, when the post terminal 12 is arranged on the upper end wall of the housing 11 and the post terminal outer end surface 123 is the upper surface of the post terminal 12, the second accommodating groove 12120 is formed as an accommodating groove with an opening open upward and a wall recessed downward. For another example, when the post terminal 12 is arranged on the lower end wall of the housing 11 and the post terminal outer end surface 123 is the lower surface of the post terminal 12, the second accommodating groove 12120 is formed as an accommodating groove with an opening open downward and a wall recessed upward.

In the above technical solution, referring to FIG. 33 again, the arrangement of the second accommodating groove 12120 on the post terminal 12 can reduce the weight of the post terminal 12 to a certain extent, so as to improve the gravimetric energy density of the battery cell 10 and the battery 100. Also, since the opening of the second accommodating groove 12120 is formed in the post terminal outer end surface 123, and the post terminal outer end surface 123 is the surface of the post terminal 12 on the side distal to the active substance-coated part 21, the second accommodating groove 12120 can be opened in a direction away from the active substance-coated part 21. In this way, when at least a part of the conductive part 22 is accommodated in the second accommodating groove 12120, the storage or sorting of the conductive part 22 or operations on the electrical connection between the conductive part 22 and the post terminal 12 can be easily achieved through the opening of the second accommodating groove 12120, thereby reducing difficulties in producing the battery cell 10 and improving the manufacture efficiency of the battery cell 10.

In addition, since the second accommodating groove 12120 is in communication with the interior of the housing 11 through the perforation 12130, the second accommodating groove 12120 may also serve as a buffering and temporary storage structure for the electrolyte, such that more electrolyte can be accommodated in the housing 11. Since the electrolyte will be consumed during the charging and discharging process of the battery cell 10, a greater amount of electrolyte can prolong the service life of the battery cell 10. It is also due to the fact that the second accommodating groove 12120 is in communication with the interior of the housing 11 through the perforation 12130, that the second accommodating groove 12120 may also serve as an accommodating and buffering structure for gas generated inside the battery cell assembly 2, thereby reducing the expansion of the battery cell 10 and improving the reliability and stability of the battery cell 10.

It is worth noting that when the accommodating part 121 is provided with the second accommodation groove 12120 and the conductive part 22 is provided in the perforation 12130 in a penetrating manner and is at least partially accommodated in the second accommodating groove 12120, the electrical connection position of the conductive part 22 and the post terminal 12 is not limited.

Illustratively, when the conductive part 22 is provided in the perforation 12130 in a penetrating manner and is at least partially accommodated in the second accommodating groove 12120, in the embodiments of the present application, the electrical connection position of the conductive part 22 and the post terminal 12 is located on a wall of the perforation 12130 formed by the post terminal 12.

In the above technical solution, arranging the electrical connection position between the conductive part 22 and the post terminal 12 on the wall of the perforation 12130 may facilitate the electrical connection operation between the conductive part 22 and the post terminal 12 through the second accommodating groove 12120. The large electrical connection area between the conductive part 22 and the post terminal 12 may help achieve the sealing of the perforation 12130 by using the electrical connection between the conductive part 22 and the post terminal 12, so as to save the sealing costs, alleviate the electrolyte leakage problem, and save sealing members.

Specifically, the conductive part 22 can be welded to the wall of the perforation 12130 at a position where the perforation 12130 is connected to the second accommodating groove 12120 to facilitate the operation. In addition, by controlling the weld mark, the perforation 12130 can be sealed using the weld mark and the conductive part 22, so as to alleviate the problem of electrolyte leaking in the housing 11 through the perforation 12130.

Further illustratively, when the conductive part 22 is provided in the perforation 12130 in a penetrating manner and is at least partially accommodated in the second accommodating groove 12120, in some other embodiments of the present application, the electrical connection position of the conductive part 22 and the post terminal 12 may also be located on a wall of the second accommodating groove 12120 formed by the post terminal 12. As such, the electrical connection operation is facilitated. For example, when the conductive part 22 is welded to the wall of the second accommodating groove 12120 formed on the post terminal 12, the conductive particles generated by welding can be prevented from entering the housing 11, which may otherwise cause short circuit and other problems.

Referring to FIG. 33 again, the post terminal 12 includes a second end wall 12121 and a second side wall 12123, the second end wall 12121 is located on the side of the second side wall 12123 proximal to the active substance-coated part 21, the second end wall 12121 and the second side wall 12123 define, in an enclosing manner, the second accommodating groove 12120, the perforation 12130 is arranged on the second end wall 12121, and the electrical connection position between the conductive part 22 and the post terminal 12 is located on the second end wall 12121 and/or the second side wall 12123.

More specifically, the conductive part 22 and the post terminal 12 may be electrically connected by welding. Therefore, the welding position is the electrical connection position of the conductive part 22 and the post terminal 12. In other embodiments of the present application, the conductive part 22 and the post terminal 12 may be electrically connected by other means instead of welding, such as by providing conductive adhesive or conductive nails, which will not be described in detail herein.

In order to simplify the description, the following description will take an example that the conductive part 22 is welded to the post terminal 12 to form an electrical connection, and that the welding position is the electrical connection position of the conductive part 22 and the post terminal 12. For example, in some embodiments, the electrical connection position of the conductive part 22 and the post terminal 12 is located on the second end wall 12121 and/or the second side wall 12123, and the conductive part 22 may be welded to at least one of the second end wall 12121 and the second side wall 12123.

In the above technical solution, arranging the electrical connection position between the conductive part 22 and the post terminal 12 on at least one of the second end wall 12121 and the second side wall 12123 will provide the second accommodating groove 12120 with the functionality of accommodating at least a part of the conductive part 22 and provide the wall of the second accommodating groove 12120 with the functionality of achieving the electrical connection to the conductive part 22, thereby simplifying the structure of the post terminal 12 and facilitating the processing of the post terminal 12. In addition, forming the perforation 12130 in the second end wall 12121 will facilitate the extension of the conductive part 22 into the second accommodating groove 12120 through the perforation 12130, which may simplify the structure of the conductive part 22, reduce the redundancy of the conductive part 22, and reduce the cost of the conductive part 22. Furthermore, the opening direction of the opening of the second accommodating groove 12120 enables the electrical connection operation on the conductive part 22 and the wall of the second accommodating groove 12120 to be easily performed through the opening of the second accommodating groove 12120, thereby reducing the difficulty of electrical connection. Furthermore, by utilizing the wall of the second accommodating groove 12120 to achieve electrical connection to the conductive part 22, the electrical connection region of the conductive part 22 and the post terminal 12 may be relatively large, thereby improving the reliability and stability of the electrical connection, and further improving the performance of the battery cell 10.

In addition, since the electrical connection position of the conductive part 22 and the post terminal 12 is located in the second accommodating groove 12120, not only can the electrical connection position be prevented from protruding out of the post terminal 12 and occupying the space outside the post terminal 12, but also the electrical connection position can be protected by the post terminal 12, thereby improving the reliability and stability of the electrical connection between the conductive part 22 and the post terminal 12.

Referring to FIGs. 33 again, in some embodiments, the conductive part 22 and the second end wall 12121 match in partial shape, and are arranged in fit and electrically connected, such that the electrical connection position between the conductive part 22 and the second end wall 12121 extends in the length or width direction of the second end wall 12121. For example, when the second end wall 12121 is flat, a part of the conductive part 22 may also be flat and fit the second end wall 12121, and the fitting position is electrically connected, such as welded. As such, the area of the electrical connection can be increased, and the reliability and stability of the electrical connection can be improved.

It is worth noting that the shape of the second end wall 12121 is not limited. For example, the second end wall may be of a flat plate structure or an arc plate structure. When the second end wall 12121 is of a plate structure, the second end wall 12121 is arranged at an included angle with the axial direction R of the post terminal 12. For example, the second end wall may be of a plate structure perpendicular to the axial direction R of the post terminal 12, or may be of an inclined plate structure that is not perpendicular to the axial direction R of the post terminal 12, where, however, the inclination direction is not limited.

For example, referring to FIG. 33 again, when the second end wall 12121 is a plate structure, the included angle θ between the second end wall 12121 and the axial direction R of the post terminal 12 is equal to 90°. That is, in the direction from the perforation 12130 to the second side wall 12123, the second end wall 12121 and the active substance-coated part 21 are equidistant. As such, the welding of the conductive part 22 to the second end wall 12121 can be facilitated.

For another example, the included angle θ between the second end wall 12121 and the axial direction R of the post terminal 12 is greater than 90°. That is, in the direction from the perforation 12130 to the second side wall 12123, the second end wall 12121 extends obliquely in a direction toward the active substance-coated part 21. As such, the extension distance of the conductive part 22 along the second end wall 12121 can be increased, so as to improve the reliability of the electrical connection. Illustratively, the included angle θ between the second end wall 12121 and the axial direction R of the post terminal 12 may be 90°-145°, for example, 100°, 110°, 120°, 130°, 140°, etc. Such a configuration makes the second end wall 12121 easy to process and facilitates the electrical connection to the conductive part 22, while adequately utilizing the space in the post terminal 12 to accommodate the conductive part 22.

For yet another example, the included angle θ between the second end wall 12121 and the axial direction R of the post terminal 12 is less than 90°. That is, in the direction from the perforation 12130 to the second side wall 12123, the second end wall 12121 extends obliquely in a direction away from the active substance-coated part 21. As such, the extension distance of the conductive part 22 along the second end wall 12121 can be increased, so as to improve the reliability of the electrical connection. Further illustratively, the included angle θ between the second end wall 12121 and the axial direction R of the post terminal 12 may be 45°-90°, for example, 50°, 60°, 70°, 80°, etc. Such a configuration makes the second end wall 12121 easy to process and facilitates the electrical connection to the conductive part 22, while adequately utilizing the space in the post terminal 12 to accommodate the conductive part 22.

Certainly, the present application is not limited to this. In other embodiments of the present application, the electrical connection position between the conductive part 22 and the second end wall 12121 may not extend in the length or width direction of the second end wall 12121, but may be a plurality of discretely arranged points. For example, the conductive part 22 is provided with a plurality of spaced-apart portions that are separately welded to the second end wall 12121, which will not be recited herein.

Referring to FIG. 33 again and further referring to FIG. 34, FIG. 34 is a partial cross-sectional view of a battery cell according to some embodiments of the present application. No matter what the specific value of the included angle θ between the second end wall 12121 and the axial direction R of the post terminal 12 is, in the embodiments of the present application, when the conductive part 22 is electrically connected to the second end wall 12121, a second recess 12122 may be arranged on the second end wall 12121 as required. The second recess 12122 is a groove formed by a part of the second end wall 12121 recessed toward the end proximal to the active substance-coated part. At least a part of the electrical connection position between the conductive part 22 and the second end wall 12121 is located in the second recess 12122.

In the above technical solution, the part of the conductive part 22 located in the second recess 12122 is configured to match the second groove 12122 in shape and arranged to fit the second groove 12122 to achieve the electrical connection, such that the second recess 12122 can be used to pre-position and limit the electrical connection position of the conductive part 22, which is beneficial to accurately locating the position to achieve the electrical connection, thereby improving the production efficiency and improving the stability and reliability of the position of the electrical connection, so as to ensure the reliability and stability of the charging and discharging operations of the battery cell 10.

Referring to FIG. 34 again, in the embodiments of the present application, the connection manner between the post terminal 12 and the housing 11 is not limited. For example, the connection manner may be welding or riveting. For example, when the two are combined by riveting, the housing 11 is provided with a mounting hole 113, and the post terminal 12 is mounted by riveting at the mounting hole 113. Certainly, it will be appreciated that when the two are fitted by welding or other manners, the housing 11 may also be provided with a mounting hole 113 to allow the mounting of the post terminal 12 at the mounting hole 113.

Optionally, referring to FIG. 33 again, the second accommodating groove 12120 may be arranged corresponding to the position of the mounting hole 113, or in other words, on the projection plane perpendicular to the axial direction R of the post terminal 12. The orthographic projection of the second accommodating groove 12120 is located within the orthographic projection range of the mounting hole 113, such that the second accommodating groove 12120 can have a greater depth to accommodate more conductive parts 22, thereby reducing the space occupied by the conductive part 22 in the housing 11 to a greater extent.

In some embodiments, referring to FIG. 33 again, when the housing 11 is provided with a mounting hole 113 and the post terminal 12 is mounted in the mounting hole 113, in the axial direction R of the post terminal 12, the depth H3 of the second accommodating groove 12120 is greater than or equal to the minimum distance H4 from the post terminal outer end surface 123 to the mounting hole 113.

It should be noted that the specific shape of the second accommodating groove 12120 is not limited, and may be a regular shape or an irregular shape, e.g., a cylindrical groove with a rectangular, elliptical, or track-shaped cross-section, or a trapezoidal groove with a rectangular cross-section and a gradually changing cross-sectional size, or a hemispherical groove with a circular cross-section and a gradually changing cross-sectional size, or a semi-ellipsoidal groove with an elliptical cross-section and a gradually changing cross-sectional size, etc. It is worth noting that the running-track shape described herein refers to a shape in which the two short sides of a rectangle are replaced by convex curves.

Therefore, the depth H3 of the second accommodating groove 12120 refers to: the maximum depth of the second accommodating groove 12120 in the axial direction R of the post terminal 12. Since the depth H3 of the second accommodating groove 12120 in the axial direction R of the post terminal 12 is greater than or equal to the minimum distance H4 from the post terminal outer end surface 123 to the mounting hole 113, the volume of the post terminal 12 can be fully utilized, such that the second accommodating groove 12120 has a greater depth, which is conducive to accommodating more conductive parts 22, thereby reducing the space occupied by the conductive parts 22 in the housing 11 to a greater extent, further improving the energy density of the battery cell 10, and further reducing the redundancy of the conductive parts 22 in the housing 11. Also, due to the greater depth, the second accommodating groove 12120 can accommodate the gas produced by the battery cell assembly 2 to ensure the reliability and stability of the battery cell 10, and can also accommodate more electrolyte to ensure the service life of the battery cell 10.

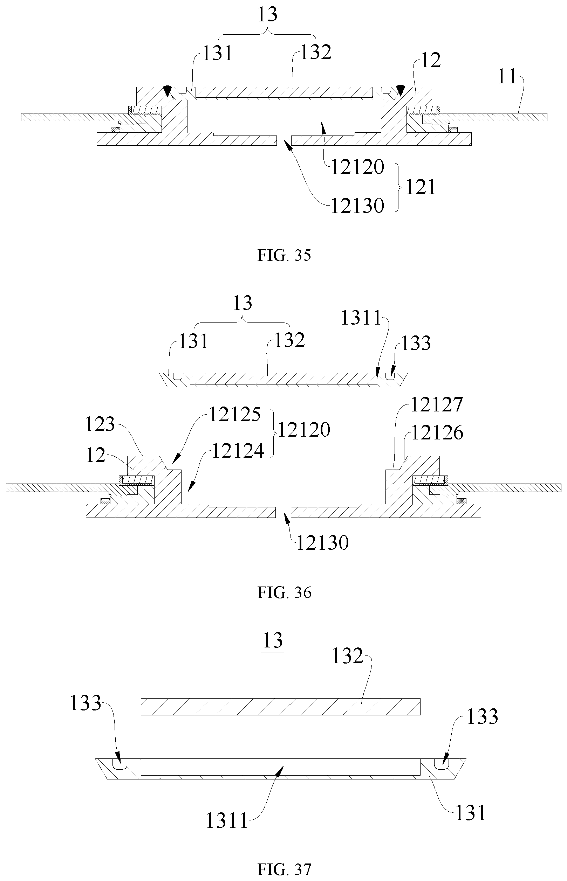

Referring to FIG. 34, and further referring to FIGs. 35 and 36, FIG. 35 is a partial cross-sectional view of a battery cell 10 according to some embodiments of the present application, and FIG. 36 is an exploded view of the battery cell 10 shown in FIG. 35. In the embodiments of the present application, when the accommodating part 121 is provided with the second accommodating groove 12120 of any of the above embodiments, optionally, the battery cell 10 may further include a first cover plate 13. The first cover plate 13 fits the post terminal 12, closes the opening of the second accommodating groove 12120, and is electrically connected to the post terminal 12.

In the above technical solution, arranging the first cover plate 13 to close the opening of the second accommodating groove 12120 allows to prevent the electrolyte in the housing 11 from leaking out of the opening of the second accommodating groove 12120. Moreover, since the first cover plate 13 closes the opening of the second accommodating groove 12120 and is electrically connected to the post terminal 12, an indirect electrical connection between the post terminal 12 and a busbar component can be easily achieved by using the first cover plate 13, and the connection area of the electrical connection can also be increased, thereby helping reduce the resistance of the electrical connection.

It is worth noting that the fitting manner and fitting position of the first cover plate 13 and the post terminal 12 are not limited, as long as the first cover plate 13 can close the opening of the second accommodating groove 12120. For example, in some embodiments, the first cover plate 13 can be welded to the post terminal 12. During the processing, the conductive part 22 may first pass through the perforation 12130 and is welded to the wall of the second accommodating groove 12120, and then the first cover plate 13 and the post terminal 12 are welded to close the opening of the second accommodating groove 12120.

It should be further noted that the specific structure of the first cover plate 13 is not limited. For example, in some optional embodiments, FIG. 37 is an exploded view of the first cover plate shown in FIG. 36. Referring to FIGs. 35-37, the first cover plate 13 includes a first conductive member 131 and a second conductive member 132 made of different materials, the first conductive member 131 fits and is electrically connected to the post terminal 12, and the second conductive member 132 fits and is electrically connected to the first conductive member 131.

In the above technical solution, the first cover plate 13 is arranged in a composite form, and the first conductive member 131 is set to be made of the same material as that of the post terminal 12, so as to facilitate the electrical connection between the first conductive member 131 and the post terminal 12. For example, the first conductive member 131 can be easy to be reliably and stably connected to the post terminal 12 through welding. Furthermore, since the second conductive member 132 is made of a different material from that of the first conductive member 131, the electrical connection between the second conductive member 132 and a busbar component and the like made of a different material from that of the post terminal 12 is facilitated. For example, the second conductive member 132 can be easy to be reliably and stably connected to a busbar component made of the same material as that of the second conductive member 132 through welding.

Illustratively, when the post terminal 12 is a negative electrode post terminal, the post terminal 12 is a copper post, and the busbar component is an aluminum plate, the first conductive member 131 may be made of copper, and the second conductive member 132 may be made of aluminum, such that the post terminal 12 and the first conductive member 131 are made of the same material and can be effectively welded and that the second conductive member 132 and the busbar component are made of the same material and can be effectively welded, thereby effectively achieving the indirect electrical connection between the post terminal 12 and the busbar component through the first cover plate 13. Moreover, the welding of the post terminal 12 to the first conductive member 131 is welding between the copper materials, which has good fluidity and is not prone to cracks, thereby helping improve the sealing effect of the welding position.

Referring to FIGs. 35-37 again, in some optional examples, the first conductive member 131 is located between the second accommodating groove 12120 and the second conductive member 132. In the above technical solution, since the first conductive member 131 is located between the second containing groove 12120 and the second conductive member 132, the second containing groove 12120 and the second conductive member 132 can be separated. Therefore, when the electrolyte in the housing 11 enters the second accommodating groove 12120 through the perforation 12130, the first conductive member 131 can be used to prevent the part of the electrolyte from making contact with the second conductive member 132, so as to prevent the electrolyte from leaking from the circumferential direction of the second conductive member 132.

It is worth noting that the fitting manner of the first conductive member 131 and the second conductive member 132 is not limited. For example, in some embodiments, referring to FIGs. 35-37, the first conductive member 131 is provided with a second groove 1311, the second conductive member 132 is embedded in the second groove 1311, and an opening of the second groove 1311 is formed on the surface of the first conductive member 131 on the side distal to the second accommodating groove 12120, such that the second conductive member 132 is exposed at the opening of the second groove 1311. Alternatively, in other embodiments, the first conductive member 131 and the second conductive member 132 may be connected in a fastening connection, a snap connection, or the like.

It should be further noted that the "exposure" of the second conductive member 132 from the opening of the second groove 1311 means that the first conductive member 131 does not block the second conductive member 132 at the opening position of the second groove 1311, and the second conductive member 132 is not required to protrude from the opening of the second groove 1311. For example, the second conductive member 132 may be flush with the surface of the first conductive member 131 on the side distal to the second accommodating groove 12120, or the second conductive member 132 may protrude from the surface of the first conductive member 131 on the side distal to the second accommodating groove 12120.

In the above technical solution, embedding the second conductive member 132 in the first conductive member 131 can reduce the difficulties in assembling the first conductive member 131 and the second conductive member 132, improve the stability and convenience of the fit of the first conductive member 131 and the second conductive member 132, reduce the thickness of the first cover plate 13, and reduce the space occupied by the first cover plate 13, so as to improve the space utilization of the battery cell 10. Also, since the second conductive member 132 may be exposed from the surface of the first conductive member 131 on the side distal to the second accommodating groove 12120 through the opening of the second groove 1311, it is conducive to achieving the electrical connection between the second conductive member 132 and the busbar component outside the post terminal 12.

In addition, since the opening of the second groove 1311 is formed on the surface of the first conductive member 131 on the side distal to the second accommodating groove 12120, it means that the second groove 1311 is open in a direction away from the active substance-coated part 21, such that the part of the first conductive member 131 configured to define the wall of the second groove 1311 is located between the second accommodating groove 12120 and the second conductive member 132, so as to separate the second accommodating groove 12120 from the second conductive member 132, thereby preventing the electrolyte entering the second groove 1311 from contacting the second conductive member 132 and reducing leakage of the electrolyte.

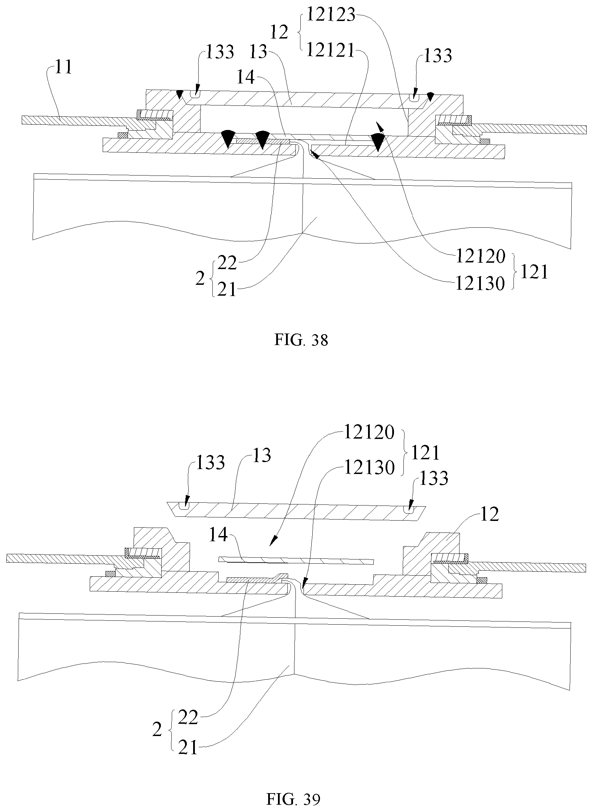

Certainly, in other embodiments, the first cover plate 13 may not be in a composite form composed of more than one material. For example, in other embodiments of the present application, FIG. 38 is a partial cross-sectional view of a battery cell according to some embodiments of the present application, and FIG. 39 is an exploded view of the battery cell shown in FIG. 38. Referring to FIGs. 38 and 39, the first cover plate 13 may also be integrally configured into a non-composite form made of the same material, for example, for adapting to the positive electrode post terminal, which will not be recited herein.

Referring to FIGs. 35-37 again, in some embodiments, the first cover plate 13 is also embedded in the opening of the second accommodating groove 12120. In the above technical solution, embedding the first cover plate 13 in the second accommodating groove 12120 can reduce the difficulty in assembling the first cover plate 13 and the post terminal 12, improve the stability of assembly of the first cover plate 13 and the post terminal 12 and the reliability and convenience of the connection, and reduce the space occupied by the first cover plate 13 outside the post terminal 12. Moreover, since the first cover plate 13 is embedded in the opening of the second accommodating groove 12120, there is sufficient space in the second accommodating groove 12120 to accommodate the conductive part 22.

Certainly, in other embodiments of the present application, the fitting manner of the first cover plate 13 and the post terminal 12 is not limited to being embedded in the second accommodating groove 12120. The first cover plate 13 may also be directly arranged outside the post terminal 12 as a covering, that is, directly lids the opening of the second accommodating groove 12120, as long as it is conducive to the fit to the busbar component of the battery 100, which is not limited in the embodiments.

Referring to FIGs. 35-37 again, optionally, in the embodiments of the present application, at least a part of the wall surface at the opening of the second accommodating groove 12120 formed by the post terminal 12 is an inclined guiding surface 12126, and the inclined guiding surface 12126 is configured to guide the first cover plate 13 to fit the opening of the second accommodating groove 12120. In the above technical solution, processing the wall surface at the opening of the second accommodating groove 12120 into an inclined surface with guidance functionality can reduce the difficulty in assembling the first cover plate 13 and the second accommodating groove 12120, and improve the assembly efficiency of the first cover plate 13 and the second accommodating groove 12120. Moreover, when the first cover plate 13 is welded to the inclined guiding surface 12126, the area at the welding position can be increased, thereby improving the reliability of the welding connection between the first cover plate 13 and the post terminal 12 and mitigating the problem of weld pool collapse or laser penetration into the post terminal 12 during welding.

Specifically, referring to FIGs. 35-37, the second accommodating groove 12120 includes a first groove segment 12124 and a second groove segment 12125 located on the side of the first groove segment 12124 proximal to the post terminal outer end surface 123. The cross-sectional area of the second groove segment 12125 is greater than the cross-sectional area of the first groove segment 12124, such that the second accommodating groove 12120 is in the shape of a stepped groove, and a step surface 12127 is formed at the connection position of the first groove segment 12124 and the second groove segment 12125, such that when the first cover plate 13 is embedded in the second accommodating groove 12120, the first cover plate can be specifically embedded in the second groove segment 12125 and supported by the step surface 12127.

In the above technical solution, by providing the second accommodating groove 12120 in a stepped groove form, the first cover plate 13 can stably fit the opening position of the second accommodating groove 12120, thereby improving the connection stability between the first cover plate 13 and the post terminal 12. In addition, by defining the groove depth of the first groove segment 12124, the second accommodating groove 12120 is provided with sufficient space to accommodate the conductive part 22.

Further, when the wall surface at the opening of the second accommodating groove 12120 formed by the post terminal 12 is the inclined guiding surface 12126, the cross-sectional area of the second groove segment 12125 may be set to gradually increase in a direction toward the post terminal outer end surface 123, such that the side wall of the second groove segment 12125 is formed as the inclined guiding surface 12126, which facilitates processing and can easily and effectively meet the guidance requirements.

Referring to FIGs. 35-37 again, in the embodiments of the present application, the first cover plate 13 may also be provided with a stress relief groove 133 as required. The stress relief groove 133 is located in the outer peripheral region of the first cover plate 13 to assist the first cover plate 13 in stress relief. In the above technical solution, by arranging the stress relief groove 133 on the first cover plate 13, the stress generated during the processing of the first cover plate 13 itself or the electrical connection between the first cover plate 13 and the post terminal 12 can be relieved, so as to mitigate the related problems such as deformation or damage of the first cover plate 13 caused by stress.

Specifically, when the first cover plate 13 and the second accommodating groove 12120 are embedded and welded, the stress generated by welding can be relieved by utilizing the stress relief groove 133, thereby improving the lateral heat conduction and reducing the probability of damage or deformation of the first cover plate 13. Meanwhile, when the first cover plate 13 is in the above composite form including the first conductive member 131 and the second conductive member 132, the stress relief groove 133 may be arranged on the first conductive member 131 and located in the outer peripheral region of the second conductive member 132. When the first conductive member 131 and the second accommodating groove 12120 are embedded and welded, the stress generated by welding can be relieved by utilizing the stress relief groove 133, thereby improving the lateral heat conduction and reducing the probability of damage or deformation of the second conductive member 132. Moreover, when the second conductive member 132 and the first conductive member 131 are embedded and welded, the stress generated by welding can be relieved by utilizing the stress relief groove 133, thereby improving the lateral heat conduction and reducing the probability of causing the first conductive member 131 to deform that may cause the first conductive member 131 to be unable to be embedded with the second accommodating groove 12120.

Referring to FIGs. 38 and 39, in the embodiments of the present application, the battery cell 10 may also be provided with a second cover plate 14 as required. The second cover plate 14 lids the outside of the perforation 12130 and is located outside the conductive part 22 in the second accommodating groove 12120.

It is worth noting that when the battery cell 10 includes the second cover plate 14, the battery cell 10 may or may not include the first cover plate 13. Furthermore, when the battery cell 1 includes both the second cover plate 14 and the first cover plate 13, the first cover plate 13 may be in a composite form using more than one material, or may be in the non-composite form using one material.

In the above technical solution, at least a part of the conductive part 22 is located in the second accommodating groove 12120, and the second cover plate 14 lids the part of the conductive part 22. The second cover plate 14 also lids the perforation 12130, such that when the electrolyte enters the second accommodating groove 12120 through the perforation 12130, the second cover plate 14 can alleviate the problem of electrolyte overflowing from the post terminal 12 through the part, thereby improving the reliability of the battery cell 10.

For example, as shown in FIGs. 38-39, when a part of the conductive part 22 is sandwiched between the second cover plate 14 and the second end wall 12121, the part of the conductive part 22, the second cover plate 14, and the second end wall 12121 can be welded together by using laser welding, so as to improve the reliability of the connection between the post terminal 12 and the conductive part 22. Furthermore, since the second cover plate 14 can press the conductive part 22, the second cover plate 14 may be used to improve the stability of the conductive part 22 accommodated in the second accommodating groove 12120.

Referring to FIGs. 3-5, 15, 20, and 34 again, a battery cell 10 according to specific embodiments of the present application is described.

In the embodiments of the present application, the battery cell 10 is in the shape of a cuboid, and the height direction of the battery cell 10 is a first direction Z, the length direction of the battery cell 10 is a second direction X, and the thickness direction of the battery cell 10 is a third direction Y. The battery cell 10 includes a housing 11. The housing 11 includes a housing body 111 and a housing cover 112. The housing body 111 is a square annular structure, one end of the housing body 111 in the first direction Z is open, and the other end in the first direction Z is closed. The housing cover 112 lids the open position of the housing body 111. Two post terminals 12 are arranged at the closed end of the housing body 111 in the first direction Z and spaced apart in the second direction X. The two post terminals 12 are the positive electrode post terminal and the negative electrode post terminal.

Both post terminals 12 are provided with the accommodating part 121. The accommodating part 121 includes the second accommodating groove 12120. Specifically, the post terminal 12 includes a second end wall 12121 and a second side wall 12123. The second end wall 12121 is located on the side of the second side wall 12123 proximal to the housing cover 112. The second end wall 12121 and the second side wall 12123 define, in an enclosing manner, the second accommodating groove 12120. The surface of the post terminal 12 on the side distal to the housing cover 112 is the post terminal outer end surface 123. The opening of the second accommodating groove 12120 is formed on the post terminal outer end surface 123. The second end wall 12121 is provided with a perforation 12130. The perforation 12130 is located at a position of the second end wall 12121 adjacent to the second side wall 12123.

The battery cell 10 further includes a battery cell assembly 2, a support 3, and an insulating member 4. The battery cell assembly 2 includes an active substance-coated part 21 and a conductive part 22. The active substance-coated part 21 is accommodated in the housing 11. The support 3 is arranged at one end of the active substance-coated part 21 and is located between the closed end of the housing body 111 in the first direction Z and the active substance-coated part 21. The support 3 is provided with two via holes 311 spaced apart in the second direction X.

The insulating member 4 includes a body insulating part 41, a first insulating part 42, and a second insulating part 43. The first insulating part 42 and the second insulating part 43 are separately arranged at the two ends of the body insulating part 41. The body insulating part 41 is wrapped around the circumference of the active substance-coated part 21, the first insulating part 42 is wrapped around the end portion of the active substance-coated part 21 distal to the support 3, and the second insulating part 43 is located on the side of the body insulating part 41 proximal to the support 3 and fits the wall surface of the support 3 on the side distal to the active substance-coated part 21. The second insulating part 43 and the support 3 are jointly wrapped around the end portion of the active substance-coated part 21 proximal to the support 3. The part of the conductive part 22 extends through the via hole 311 in the support 3 and the perforation 12130 in the post terminal 12 into the second accommodating groove 12120 and is welded to the second end wall 12121, so as to electrically connect the active substance-coated part 21 to the post terminal 12 via the conductive part 22.

In the technical solution of the embodiments of the present application, connecting at least a part of the insulating member 4 to the wall surface of the support 3 distal to the battery cell assembly 2 can, when loading the battery cell assembly 2 with the support 3 into the housing 11, prevent the housing 11 from scratching the edge of the insulating member 4 or the connection position between the insulating member 4 and the support 3, prevent the connection position of the two from being pulled apart in a housing process, reduce the movement and slippage of the insulating member 4 in housing the battery cell assembly 2, and improve the connection reliability between the insulating member 4 and the support 3, reducing the fall-off risk of the insulating member 4, the corrosion risk of the housing 11 due to the exposure of the battery cell assembly 2, the failure risk of the battery cell assembly 2 and the risk of electrolyte leakage, and thus improving the reliability and stability of the battery cell 10. Also, compared with a connection of the insulating member 4 to the circumference of the battery cell assembly 2, fitting the insulating member 4 to the support 3 reduces the adjacencies of the insulating member 4 to four circumferential surfaces of the housing 11 to the adjacency to one surface at one end of the housing 11, and greatly reduces the probability of interfering with the fitting position of the insulating member 4 and the support 3, thus further improving the reliability and stability of the insulating member 4 and the reliability and stability of the battery cell 10. In addition, connecting at least a part of the insulating member 4 to the wall surface of the support distal to the battery cell assembly 2 can provide the insulating member 4 with a design with greater dimensions, applicability to battery cell assemblies 2 of different sizes, higher compatibility, and improved manufacturability. Moreover, after the support 3 and the battery cell assembly 2 are mounted in place in the housing 11, the insulating member 4 is pressed between a wall surface of the housing 11 opposite to an opening 1110 and the support 3, which can further reduce the fall-off risk of the insulating member 4, the failure risk of the battery cell assembly 2 due to exposure and the corrosion risk of the housing 11, thereby improving the reliability and stability of the battery cell 10.

According to some embodiments of the present application, the present application further provides a battery 100, including the battery cell 10 described in any of the above solutions.

In the above technical solution, providing the battery 100 with the above battery cell 10 and connecting at least a part of the insulating member 4 to the wall surface of the support 3 distal to the battery cell assembly 2, can improve the connection reliability between the insulating member 4 and the support 3, and reduce the fall-off risk of the insulating member 4, the corrosion risk of the housing 11 due to the exposure of the battery cell assembly 2, the failure risk of the battery cell assembly 2 and the risk of electrolyte leakage, thus improving the reliability and stability of the battery 100.

According to some embodiments of the present application, the present application further provides an electric device 1000, including the battery 100 described in any of the above solutions.

In the above technical solution, providing the electric device 1000 with the above battery 100 and the improved working reliability and stability of the battery 100 can improve the working reliability and stability of the electric device 1000. It will be appreciated that, when the electric device 1000 is a vehicle, the prolonged service life of the battery 100 is conducive to improving the vehicle's endurance mileage.

The electric device 1000 may be any one of the aforementioned devices or systems that apply the battery 100.

It should be noted that the embodiments and features of the embodiments in the present application may be combined with each other without conflict.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell (10), comprising:
a housing (11);
a battery cell assembly (2);
a support (3), arranged at one end of the battery cell assembly (2); and
an insulating member (4), fitting the support (3) and wrapped around the battery cell assembly (2);
wherein the battery cell assembly (2), the support (3), and the insulating member (4) are all arranged in the housing (11), and at least a part of the insulating member (4) is connected to a wall surface of the support (3) distal to the battery cell assembly (2).

2. The battery cell (10) according to claim 1, wherein the insulating member (4) and the circumference of the wall surface of the support (3) distal to the battery cell assembly (2) are in an annular continuous connection or in an annular spaced connection.

3. The battery cell (10) according to claim 2, wherein the insulating member (4) and the wall surface of the support (3) distal to the battery cell assembly (2) are in a hot-melting connection to form a connection mark (401);
the connection mark (401) annularly extends in the circumferential direction of the wall surface; or, a plurality of the connection mark (401) are present, and the plurality of connection marks (401) are arranged in the circumferential direction of the wall surface and spaced apart.

4. The battery cell (10) according to claim 1, wherein a post terminal (12) is arranged on the housing (11); the battery cell assembly (2) comprises an active substance-coated part (21) and a conductive part (22); the conductive part (22) is connected to the side of the active substance-coated part (21) proximal to the support (3), extends toward the post terminal (12), and is connected to the post terminal (12); the insulating member (4) and the support (3) are jointly wrapped around the circumference of the active substance-coated part (21).

5. The battery cell (10) according to claim 4, wherein the insulating member (4) comprises a body insulating part (41), a first insulating part (42), and a second insulating part (43), and the body insulating part (41) is wrapped around the circumference of the active substance-coated part (21);
the first insulating part (42) and the second insulating part (43) are separately arranged at the two ends of the body insulating part (41); the first insulating part (42) is located on the side of the body insulating part (41) distal to the support (3) and wrapped around the end portion of the active substance-coated part (21) distal to the support (3), and the second insulating part (43) is located on the side of the body insulating part (41) proximal to the support (3), configured to fit the support (3), and, along with the support (3), wrapped around the end portion of the active substance-coated part (21) proximal to the support (3).

6. The battery cell (10) according to claim 5, wherein the body insulating part (41) comprises a plurality of body parts (410); and the plurality of body parts (410) are connected end-to-end in sequence in a ring shape and jointly wrapped around the circumference of the active substance-coated part (21), and the first insulating part (42) and the second insulating part (43) are separately located at the two ends of the ring-shaped structure formed by the plurality of body parts (410).

7. The battery cell (10) according to claim 6, wherein connection positions of any two adjacent body parts (410) partially overlap.

8. The battery cell (10) according to claim 6, wherein the circumference of the active substance-coated part (21) is provided with a plurality of surfaces;
each of the body parts (410) comprises a body surface and two flanges arranged on two sides of the body surface, any two adjacent body parts (410) are connected via the flanges, and each of the body surfaces or a connection structure of every two flanges covers a different surface on the circumference of the active substance-coated part (21).

9. The battery cell (10) according to claim 8, wherein the circumference of the active substance-coated part (21) is provided with four surfaces;
the body insulating part (41) comprises two body parts (410) arranged on two sides of the first insulating part (42), i.e., a first body part (411) and a second body part (412); the first body part (411) comprises a first body surface (4111), and a first flange (4112) and a second flange (4113) arranged on two sides of the first body surface (4111); the second body part (412) comprises a second body surface (4121), and a third flange (4122) and a fourth flange (4123) arranged on two sides of the second body surface (4121); the first flange (4112) and the third flange (4122) are connected, and the second flange (4113) and the fourth flange (4123) are connected;
the first body surface (4111), the connection structure of the first flange (4112) and the third flange (4122), the second body surface (4121), and the connection structure of the second flange (4113) and the fourth flange (4123) separately cover the four surfaces arranged in sequence on the circumference of the active substance-coated part (21).

10. The battery cell (10) according to claim 9, wherein the first insulating part (42) is provided with a center line (42a), and the first body part (411) and the second body part (412) are separately located on the two sides of the center line (42a) of the first insulating part (42);
around the center line (42a), the first body part (411) and the second body part (412) are arranged in mirror images, or the first body surface (4111) and the second body surface (4121) are arranged in mirror images.

11. The battery cell (10) according to claim 8, wherein the second insulating part (43) comprises a plurality of insulating sub-parts (430), and the plurality of insulating sub-parts (430) are connected to the plurality of body parts (410) in a one-to-one correspondence;
any two adjacent insulating sub-parts (430) partially overlap.

12. The battery cell (10) according to claim 11, wherein each of the insulating sub-parts (430) comprises a main surface (431) and two sub-surfaces (432); the main surface (431) is connected to the body surface of the corresponding body part (410), and the two sub-surfaces (432) are separately connected to the two flanges of the corresponding body part (410);
two sub-surfaces (432) corresponding to any two adjacent flanges are connected, and each of the sub-surfaces (432) is connected to the adjacent main surface (431).

13. The battery cell (10) according to claim 12, wherein the two sub-surfaces (432) corresponding to any two adjacent flanges partially overlap; and/or, each of the sub-surfaces (432) partially overlaps with the adjacent main surface (431).

14. The battery cell (10) according to claim 5, wherein a connection position of the body insulating part (41) and the first insulating part (42) is provided with a score (44); and/or a connection position of the body insulating part (41) and the second insulating part (43) is provided with a score (44).

15. The battery cell (10) according to any one of claims 1-14, wherein a post terminal (12) is arranged on the housing (11); the battery cell assembly (2) comprises an active substance-coated part (21) and a conductive part (22); the conductive part (22) is connected to the side of the active substance-coated part (21) proximal to the support (3); the support (3) is provided with a via hole (311), and the conductive part (22) passes through the via hole (311) to be connected to the post terminal (12).

16. The battery cell (10) according to claim 15, wherein the support (3) is of an integrated structure; or, the support (3) is of a split-type structure and comprises a first support (33) and a second support (34) that are separately formed, and the first support (33) and the second support (34) define the via hole (311) therebetween.

17. The battery cell (10) according to claim 15, wherein a receiving groove (393) in communication with the via hole (311) is arranged on the side of the support (3) distal to the active substance-coated part (21) and accommodates at least a part of the post terminal (12).

18. The battery cell (10) according to claim 15, wherein a guiding part (32) is arranged on the side of the support (3) distal to the active substance-coated part (21); the guiding part (32) defines in an enclosing manner the circumferential direction of the via hole (311), and extends in a direction toward the post terminal (12).

19. The battery cell (10) according to claim 18, wherein an accommodating part (121) is arranged on the post terminal (12); at least a part of the conductive part (22) is accommodated in the accommodating part (121); at least a part of the guiding part (32) extends into the accommodating part (121) to guide the accommodation of the conductive part (22) in the accommodating part (121).

20. The battery cell (10) according to claim 15, wherein a guiding groove (312) in communication with the via hole (311) is formed on the side of the support (3) proximal to the active substance-coated part (21) and accommodates at least a part of the conductive part (22); the cross-sectional area of the guiding groove (312) gradually increases in a direction from the support (3) to the active substance-coated part (21).

21. The battery cell (10) according to claim 20, wherein the support (3) is provided with at least one first liquid injection guide groove (392), and the first liquid injection guide groove (392) is located on the side of the support (3) proximal to the active substance-coated part (21); at least one of the first liquid injection guide grooves (392) is in communication with the guiding groove (312).

22. The battery cell (10) according to any one of claims 1-21, wherein the support (3) is provided with a first liquid injection guide groove (392), and the first liquid injection guide groove (392) is located on the side of the support (3) proximal to the battery cell assembly (2); and/or the support (3) is provided with a second liquid injection guide groove, and the second liquid injection guide groove is located on the side of the support (3) distal to the battery cell assembly (2).

23. The battery cell (10) according to any one of claims 1-22, wherein the side of the support (3) proximal to the battery cell assembly (2) is provided with a clearance part (391) configured to provide clearance for the outer edge on the side of the battery cell assembly (2) proximal to the support (3).

24. The battery cell (10) according to any one of claims 1-23, wherein a limiting protruding part (38) is arranged on one side of the support (3) and in snap-fit with the battery cell assembly (2).

25. The battery cell (10) according to any one of claims 1-24, wherein a post terminal (12) is arranged on the housing (11); the battery cell assembly (2) comprises an active substance-coated part (21) and a conductive part (22); the conductive part (22) is connected to the side of the active substance-coated part (21) proximal to the support (3);
the post terminal (12) is provided with an accommodating part (121), and at least a part of the conductive part (22) is accommodated in the accommodating part (121) and connected to the post terminal (12).

26. The battery cell (10) according to claim 25, wherein the accommodating part (121) is provided with a first accommodating groove (12110), the surface of the post terminal (12) on the side proximal to the active substance-coated part (21) is a post terminal inner end surface (122), an opening of the first accommodating groove (12110) is formed on the post terminal inner end surface (122), and at least a part of the conductive part (22) is accommodated in the first accommodating groove (12110).

27. The battery cell (10) according to claim 25, wherein the accommodating part (121) is provided with a second accommodating groove (12120), the surface of the post terminal (12) on the side distal to the active substance-coated part (21) is a post terminal outer end surface (123), an opening of the second accommodating groove (12120) is formed on the post terminal outer end surface (123), the second accommodating groove (12120) is in communication with the interior of the housing (11) through a perforation (12130), and the conductive part (22) is provided in the perforation (12130) in a penetrating manner and is at least partially accommodated in the second accommodating groove (12120).

28. The battery cell (10) according to any one of claims 1-27, wherein the housing (11) comprises a housing body (111) and a housing cover (112), and the housing body (111) is provided with an opening (1110);
when one opening (1110) is present, the opening (1110) is lidded with the housing cover (112), and the support (3) is located at the end of the battery cell assembly (2) distal to the opening (1110); or, when two openings (1110) are present, each of the openings (1110) is lidded with one of the housing covers (112), and the support (3) is located at the end of the battery cell assembly (2) distal to any one of the openings (1110).

29. The battery cell (10) according to any one of claims 1-28, wherein at least one post terminal (12) is arranged on a housing wall on the side of the housing (11) proximal to the support (3).

30. A battery (100), comprising the battery cell (10) according to any one of claims 1-29.

31. An electric device (1000), comprising the battery (100) according to claim 30.
